# NEUE EUROPÄISCHE PATENTSCHRIFT

(11) **EP 3 427 036 B2**
(45) Veröffentlichungstag und Bekanntmachung des Hinweises auf die Entscheidung über den Einspruch: **09.11.2022**
(45) Hinweis auf die Patenterteilung: 01.01.2020
(21) Anmeldenummer: 17710694.5
(22) Anmeldetag: 07.03.2017
(51) Int. Cl.: G01N 21/64, G02B 21/00, G02B 27/58

(54) **VERFAHREN ZUM HOCHAUFGELÖSTEN LOKALEN ABBILDEN EINER STRUKTUR IN EINER PROBE, UM REAKTIONEN EINES INTERESSIERENDEN OBJEKTS AUF VERÄNDERTE UMGEBUNGSBEDINGUNGEN ZU ERFASSEN**
METHOD FOR A HIGH-RESOLUTION LOCAL IMAGING OF A STRUCTURE IN A SAMPLE IN ORDER TO DETECT REACTIONS OF AN OBJECT OF INTEREST TO ALTERED ENVIRONMENTAL CONDITIONS
PROCÉDÉ D'IMAGERIE LOCALE À HAUTE RÉSOLUTION D'UNE STRUCTURE DANS UN ÉCHANTILLON, AFIN DE DÉTECTER DES RÉACTIONS D'UN OBJET PRÉSENTANT UN INTÉRÊT À DES CONDITIONS ENVIRONNEMENTALES MODIFIÉES

(30) Priorität: 07.03.2016 DE 102016104100
(43) Veröffentlichungstag der Anmeldung: 16.01.2019
(73) Patentinhaber: Max-Planck-Gesellschaft zur Förderung der Wissenschaften e.V., 80539 München (DE)
(72) Erfinder: HELL, Prof. Dr. Stefan W., 37085 Göttingen (DE); GÖTTFERT, Dr. Fabian, 37075 Göttingen (DE); WESTPHAL, Dr. Volker, 30161 Hannover (DE)
(74) Vertreter: REHBERG HÜPPE + PARTNER
(86) Internationale Anmeldenummer: PCT/EP2017/055360
(87) Internationale Veröffentlichungsnummer: WO 2017/153430

(56) Entgegenhaltungen:
- DE-A1-102005 027 896
- DE-A1-102011 051 086
- DE-A1-102016 117 096
- JP-A- 2015 200 693
- US-A1- 2007 206 278
- US-A1- 2014 340 482
- HOEBE R A ET AL: "Controlled light-exposure microscopy reduces photobleaching and phototoxicity in fluorescence live-cell imaging", NATURE BIOTECHNOLOGY, GALE GROUP INC, US, Bd. 25, Nr. 2, 1. Februar 2007 (2007-02-01), Seiten 249-253, XP002576430, ISSN: 1087-0156, DOI: 10.1038/NBT1278 [gefunden am 2007-01-21]
- THORSTEN STAUDT ET AL: "Far-field optical nanoscopy with reduced number of state transition cycles", OPTICS EXPRESS, Bd. 19, Nr. 6, 14. März 2011 (2011-03-14), Seiten 5644-5657, XP055266062, DOI: 10.1364/OE.19.005644
- D. LI ET AL: "Extended-resolution structured illumination imaging of endocytic and cytoskeletal dynamics", SCIENCE, Bd. 349, Nr. 6251, 27. August 2015 (2015-08-27), Seiten aab3500-aab3500, XP055378994, ISSN: 0036-8075, DOI: 10.1126/science.aab3500
- GÖTTFERT et al.: "Strong signal increase in STED fluorescence microscopy by imaging regions of subdiffraction exten t", PNAS, vol. 114, no. 9, 28 February 2017 (2017-02-28), pages 2125-2130, DOI: 10.1073/pnas.1621495114
- GÖTTFERT: "STED microscopy with scanning fields below the diffraction limit", Dissertation, 1 December 2015 (2015-12-01), Georg-August-Universität, Göttingen Retrieved from the Internet: URL:http://ediss.uni-goettingen.de/bitstre am/handle/11858/00-1735-0000-002B-7CAC-1/G oettfert_PhD_Thesis.pdf?sequence=1
- BALZAROTTI et al.: "Nanometer resolution imaging and tracking of fluorescent molecules with minimal photon fluxes", Science, vol. 355, 10 February 2017 (2017-02-10), pages 606-612, DOI: 10.1126/science.aak9913
- DANZL et al.: "Coordinate-targeted fluorescence nanoscopy with multiple off states", Nature Photonics, vol. 10, no. 2, 18 January 2016 (2016-01-18), pages 122-129,
- BINGEN P. et al.: "Parallelized STED fluorescence nanoscopy", Optics Express, vol. 24, no. 24, 21 November 2011 (2011-11-21), pages 23716-23726,
- Rittweger et al., ?STED microscopy reveals crystal colour centres with nanometric resolution", Nature Photonics, Vol. 3,Seiten 144-147, 22.02.2009
- Keller, "Optimal de-excitation patterns for RESOLFT-Microscopy, Dissertation, 2006

## Beschreibung

### TECHNISCHES GEBIET DER ERFINDUNG

Die Erfindung bezieht sich auf Verfahren zum hochaufgelösten Abbilden einer mit Lumineszenzmarkern markierten Struktur in einer Probe.

Die Erfindung fällt auf das Gebiet der hochauflösenden Rasterlumineszenzlichtmikroskopie, bei der Maßnahmen getroffen werden, die es erlauben, aus der jeweiligen Probe emittiertes Lumineszenzlicht mit höherer Ortsauflösung als der Beugungsgrenze bei der Wellenlänge des Lumineszenzlichts und bei der Wellenlänge von etwaigem Anregungslicht, mit dem die Lumineszenzmarker räumlich begrenzt zur Emission von Lumineszenzlicht angeregt werden, einem Ort in der Probe zuzuordnen. Vielfach handelt es sich bei den Lumineszenzmarkern um Fluoreszenzmarker, die nach Anregung durch Anregungslicht Fluoreszenzlicht als Lumineszenzlicht emittieren. Dann spricht man von Fluoreszenzmikroskopie.

### STAND DER TECHNIK

Bei bekannten Verfahren und Rasterlumineszenzlichtmikroskopen nach den Oberbegriffen der unabhängigen Patenansprüche wird zur Erhöhung der Ortsauflösung Licht, das sich auf die Emission von Lumineszenzlicht durch die Lumineszenzmarker auswirkt, mit einer Intensitätsverteilung auf die Probe gerichtet, die eine von Intensitätsmaxima benachbarte Nullstelle aufweist. Vielfach handelt es sich bei diesem Licht um Lumineszenzverhinderungslicht, mit dem die Emission von Lumineszenzlicht durch diejenigen Lumineszenzmarker verhindert wird, welche sich außerhalb der Nullstelle befinden. Das aus der Probe emittierte Lumineszenzlicht kann so dem Ort der Nullstelle zugeordnet werden, weil nur dort angeordnete Lumineszenzmarker in der Lage sind, Lumineszenzlicht zu emittieren.

So werden bei der STED-Fluoreszenzmikroskopie zuvor mit Anregungslicht angeregte Fluoreszenzmarker mittels Stimulationslicht als Fluoreszenzverhinderungslicht bis auf diejenigen im Bereich der Nullstelle durch stimulierte Emission wieder abgeregt, so dass nur die im Bereich der Nullstelle befindlichen Fluoreszenzmarker das anschließend gemessene Fluoreszenzlicht emittiert haben können. Dieses Fluoreszenzlicht kann so dem Ort der Nullstelle in der Probe zugeordnet werden. Durch Abtasten der Probe mit der Nullstelle wird die räumliche Verteilung der Fluoreszenzmarker in der Probe bestimmt. Auf diese Weise können der Aufbau und die räumliche Verteilung einer mit den Fluoreszenzmarkern markierten Struktur in der Probe abgebildet werden.

Bei der GSD-Fluoreszenzmikroskopie werden mit Fluoreszenzverhinderungslicht diejenigen Fluoreszenzmarker außerhalb des Bereichs der Nullstelle in einen elektronischen Dunkelzustand überführt und sind so durch Anregungslicht nicht zur Emission von Fluoreszenzlicht anregbar.

Bei der RESOLFT-Fluoreszenzmikroskopie kommt Fluoreszenzverhinderungslicht zum Einsatz, das photochrome Fluoreszenzmarker aus einem fluoreszenten Zustand bis auf diejenigen im Bereich der Nullstelle in einen nicht fluoreszenten Zustand überführt. Bei anschließender Anregung der Fluoreszenzmarker mit Anregungslicht werden entsprechend nur die Fluoreszenzmarker im Bereich der Nullstelle der Intensitätsverteilung des Fluoreszenzverhinderungslichts von Anregungslicht zur Emission von Fluoreszenzlicht angeregt. So kann auch hier das von den Fluoreszenzmarkern aus der Probe emittierte Fluoreszenzlicht dem Ort der Nullstelle der Intensitätsverteilung des Fluoreszenzverhinderungslichts zugeordnet werden.

Bei allen bis hierher geschilderten Verfahren der hochauflösenden Rasterlumineszenzlichtmikroskopie besteht eine nicht unerhebliche Gefahr, die Lumineszenzmarker in der jeweiligen Probe vorübergehend oder gar dauerhaft zu bleichen, d. h. zu inaktivieren, so dass diese kein Lumineszenzlicht mehr emittieren. Diese Gefahr beruht auf der Tatsache, dass die Intensität des Lumineszenzverhinderungslichts, um alle Lumineszenzmarker außerhalb des Bereichs der Nullstelle an der Emission von Lumineszenzlicht zu hindern und um zugleich die räumlichen Abmessungen des Bereichs der Nullstelle, aus dem heraus die Lumineszenzmarker noch Lumineszenzlicht emittieren können, stark einzuengen, sehr hoch eingestellt werden muss. Das Lumineszenzverhinderungslicht wirkt mit dieser hohen Intensität bereits dann auf die Lumineszenzmarker in der Probe ein, wenn sich ihnen der Bereich der Nullstelle des Lumineszenzverhinderungslichts nähert, d. h., schon bevor sie zum ersten Mal in den Bereich der Nullstelle gelangen und damit zum ersten Mal von ihnen emittiertes Lumineszenzlicht registriert wird. Dies kann zur Folge haben, dass zum Bleichen neigende Lumineszenzmarker bei den beschriebenen Verfahren nicht eingesetzt werden können oder zumindest nicht mit sehr hohen Intensitäten des Lumineszenzverhinderungslichts, wie sie zur Maximierung der Ortsauflösung wünschenswert wären.

Um der geschilderten Problematik des vorübergehenden und insbesondere des dauerhaften Bleichens bei der hochauflösenden Rasterlumineszenzlichtmikroskopie zu begegnen, sind verschiedene Ansätze verfolgt worden. Die DE 10 2005 027 896 A1 lehrt, das Fluoreszenzverhinderungslicht bei der STED-Fluoreszenzmikroskopie in Pulsen mit vergleichsweise großen zeitlichen Abständen oder unter schnellem Abtasten der jeweiligen Probe mit der Nullstelle auf die Probe aufzubringen, so dass dieselben Bereiche der Probe nur in einem optimierten zeitlichen Wiederholungsabstand der hohen Intensität des Fluoreszenzverhinderungslichts ausgesetzt werden. Auf diese Weise wird die Intensität des von der Probe erhältlichen Fluoreszenzlichts erhöht, weil die Rate, mit der die Fluoreszenzmarker aus einem angeregten Zwischenzustand durch weitere Anregung in einen permanenten oder nur langsam abklingenden Dunkelzustand gelangen, erheblich reduziert wird. Anders gesagt wird mit einem relativ großen Wiederholungsabstand des Beaufschlagens jedes einzelnen Bereichs der Probe mit der Intensitätsverteilung des Fluoreszenzverhinderungslichts die in einem bestimmten Zeitraum von der gesamten Probe erhältliche Menge an Fluoreszenzlicht maximiert. Diese Vorgehensweise reduziert auch die Neigung der Fluoreszenzmarker zu bleichen, weil eine stärkere Besetzung von angeregten Zuständen, aus denen heraus eine photochemische Zerstörung der Fluoreszenzmarker erfolgt, vermieden wird.

Zur Durchführung hochauflösender Fluoreszenzmikroskopie auch mit zum Bleichen neigenden Fluoreszenzmarkern lehrt die DE 10 2011 051 086 A1, Abtastbedingungen, die neben einer Abtastgeschwindigkeit, mit der die jeweilige Probe abgetastet wird, und Lichtintensitäten einer Intensitätsverteilung von Fluoreszenzverhinderungslicht Eigenschaften und eine Konzentration der Fluoreszenzmarker in der Probe umfassen, so aufeinander abzustimmen, dass das Fluoreszenzlicht in Form einzeln detektierbarer Photonen aus dem Bereich der Nullstelle der Intensitätsverteilung des Fluoreszenzverhinderungslichts emittiert wird. Ein Bild einer mit den Fluoreszenzmarkern markierten Struktur in der Probe wird dann aus den Orten zusammengesetzt, die den detektierten Photonen während mehrerer Wiederholungen des Abtastens der Probe mit der Nullstelle zugeordnet wurden. Auf diese Weise wird die Wahrscheinlichkeit des Bleichens der Fluoreszenzmarker reduziert, bevor sie erstmalig von der Nullstelle erreicht und somit erfasst werden. Dies beruht darauf, dass die Wahrscheinlichkeit des Bleichens mit der Intensität des von den einzelnen Fluoreszenzmarkern erhaltenen Fluoreszenzlichts korreliert ist. Da das Fluoreszenzlicht auf einzelne Photonen minimiert wird, wird auch die Gefahr des Bleichens minimiert. Grundsätzlich werden bei dem aus der DE 10 2011 051 086 A1 bekannten Verfahren die einzelnen Fluoreszenzmarker von der Nullstelle des Fluoreszenzverhinderungslichts aber weiterhin erst dann erreicht, nachdem sie zuvor den hohen Intensitäten im Bereich der angrenzenden Intensitätsmaxima ausgesetzt waren.

Um bei der hochauflösenden Rasterlumineszenzlichtmikroskopie auch gegenüber Bleichen empfindliche Substanzen einsetzen zu können, ist es aus der WO 2011/131591 bekannt, eine Probe, in der sich eine mit Lumineszenzmarkern markierte interessierende Struktur befindet, mit einer Messfront zu überfahren. Dabei nehmen die Intensitäten von optischen Signalen über eine Tiefe der Messfront, die kleiner als die Beugungsgrenze bei der Wellenlänge der optischen Signale ist, derart zu, dass ein Anteil der Lumineszenzmarker, der Lumineszenzlicht emittiert, durch Überführen der Lumineszenzmarker in einen lumineszenten Zustand von nicht vorhanden anwächst und durch Überführen der Lumineszenzmarker in einen nicht lumineszierenden Zustand wieder auf nicht vorhanden abfällt. Das Lumineszenzlicht aus dem Bereich der Messfront wird erfasst und den zugehörigen Positionen der Messfront in der Probe zugeordnet. Die Zuordnung des Lumineszenzlichts längs der Messfront kann dabei ebenfalls mit einer Ortsauflösung jenseits der Beugungsgrenze erfolgen, beispielsweise unter Zuordnung der registrierten Photonen zu einem einzigen Lumineszenzmarker, wie dies beispielsweise bei einem als GSDIM bekannten lichtmikroskopischen Verfahren erfolgt.

Eine Möglichkeit, die Geschwindigkeit beim Abbilden einer interessierenden Struktur einer Probe in der Rasterlumineszenzlichtmikroskopie zu erhöhen, ist es, die Probe mit mehreren Nullstellen des Lumineszenzverhinderungslichts parallel abzutasten. Dabei wird das aus der Probe emittierte Lumineszenzlicht den einzelnen Nullstellen des Lumineszenzverhinderungslichts getrennt zugeordnet. Aus der DE 10 2006 009 833 B4 ist es bekannt, eine Intensitätsverteilung von Lumineszenzverhinderungslicht mit einem Raster von Nullstellen auszubilden, indem zwei orthogonal zueinander verlaufende Linienmuster aus Lumineszenzverhinderungslicht in der Probe miteinander überlagert werden. Dabei wird eine Interferenz zwischen den Linienmustern verhindert, so dass sich ihre Intensitätsverteilungen aufaddieren. Die gewünschten von Intensitätsmaxima benachbarten Nullstellen der Intensitätsverteilung des Lumineszenzverhinderungslichts verbleiben an den Kreuzungspunkten der linienförmigen Nullstellen der beiden Liniengitter. Um die Probe im Bereich der rasterförmigen Anordnung der Nullstellen vollständig abzutasten, reicht es aus, jede Nullstelle über die Abstände zu den ihr in Richtung beider Linienmuster nächstbenachbarten Nullstellen zu verschieben. Auch dabei werden die meisten Lumineszenzmarker in der Probe hohen Lichtintensitäten des Lumineszenzverhinderungslichts ausgesetzt, bevor sie von der Nullstelle erreicht und damit erstmalig erfasst werden. Die Lumineszenzmarker müssen daher so ausgewählt werden, dass sie diesen hohen Lichtintensitäten standhalten, ohne zu bleichen.

Li D et al.: Extended-resolution structured illumination imaging of endocytic and cytoskeletal dynamics, Science 2015 Aug 28; 349(6251) offenbaren ein Verfahren zum hochaufgelösten Abbilden einer mit aktivierbaren Fluoreszenzmarkern markierten Struktur in einer Probe, wobei die Probe mit zusammenfallenden linien- oder ebenenförmigen Nullstellen von Lichtintensitätsverteilungen von Fluoreszenzaktivierungslicht und Fluoreszenzanregungslicht nacheinander in unterschiedlichen Richtungen abgetastet wird und dabei das von der Probe emittierte Fluoreszenzlicht mit einer Kamera erfasst wird. Aus der Auswertung der erfassten Lichtintensitäten kann ein Abbild einer interessierenden Struktur in der Probe rekonstruiert werden, dessen Ortsauflösung durch die Einengung der übereinstimmenden Nullstellen des Fluoreszenzaktivierungslichts und des Fluoreszenzanregungslichts, aus denen jeweils kein Fluoreszenzlicht von der Probe stammt, erhöht ist. Auch bei diesem bekannten Verfahren sind die Nullstellen des Fluoreszenzaktivierungslichts und des zugleich als Fluoreszenzdeaktivierungslicht wirkenden Fluoreszenzanregungslichts von Intensitätsmaxima des Fluoreszenzaktivierungslichts und des Fluoreszenzanregungslichts benachbart. Mit den hohen Intensitäten des Fluoreszenzaktivierungslichts und des Fluoreszenzanregungslichts im Bereich dieser Intensitätsmaxima werden alle Lumineszenzmarker in der Probe beaufschlagt, bevor sie in den Bereich der zusammenfallenden Nullstellen des Fluoreszenzaktivierungslichts und des Fluoreszenzanregungslichts gelangen. Damit ist auch bei diesem bekannten Verfahren das Risiko eines Bleichens der Fluoreszenzmarker, noch bevor sie zu dem relevanten Messsignal beitragen, sehr hoch.

Aus der WO 2014/108455 A1 ist ein Verfahren zum räumlich hochauflösenden Abbilden einer mit Lumineszenzmarkern markierten Struktur einer Probe bekannt, bei dem die Probe wie in der STED-Fluoreszenzmikroskopie mit Anregungslicht und mit Stimulationslicht als Lumineszenzverhinderungslicht beaufschlagt wird, um den Bereich der Probe, dem aus der Probe emittiertes und detektiertes Fluoreszenzlicht zugeordnet werden kann, auf den Bereich einer Nullstelle des Stimulationslichts zu begrenzen. Um dabei die Lumineszenzmarker vor den hohen Intensitäten des Stimulationslichts im Bereich seiner an die Nullstelle angrenzenden Intensitätsmaxima zu schützen, wird die Probe zusätzlich mit Anregungsverhinderungslicht beaufschlagt, dessen Intensitätsverteilung ein lokales Minimum aufweist, das mit der Nullstelle des Stimulationslichts zusammenfällt. Dieses Anregungsverhinderungslicht kann insbesondere Ausschaltlicht sein, das schaltbare Lumineszenzmarker außerhalb des Minimums des Anregungsverhinderungslichts in einen inaktiven Zustand ausschaltet, in dem sie mit dem Anregungslicht nicht zur Emission von Lumineszenzlicht anregbar sind. Konkret kann es sich bei den Lumineszenzmarkern um schaltbare Fluoreszenzfarbstoffe handeln, wie sie bei der hochauflösenden RESOLFT-Fluoreszenzmikroskopie zum Einsatz kommen. Bei dem aus der WO 2014/108455 bekannten Verfahren wird die Schaltbarkeit der Lumineszenzmarker primär aber nicht zur Erhöhung der räumlichen Auflösung genutzt, sondern um sie vor dem Bleichen durch die hohen Intensitäten des Stimulationslichts zu schützen.

Aus R A Hoebe et al.: Controlled light-exposure microscopy reduces photobleaching and phototoxicity in fluorescence live-cell imaging, Nature Biotechnology, Volume 25, No. 2, February 2007, Seiten 249 bis 253 ist ein Verfahren der konfokalen Fluoreszenzmikroskopie bekannt, bei dem eine Probe mit fokussiertem Anregungslicht abgetastet wird, um eine mit Lumineszenzmarkern markierte Struktur in der Probe abzubilden. Dabei wird in jeder Position des fokussierten Anregungslichts in der Probe das Anregungslicht abgeschaltet, sobald eine Anzahl an Photonen, die von den angeregten Lumineszenzmarkern in der Probe emittiert und mit einem Detektor registriert wurden, einen oberen Grenzwert erreicht, der einem gewünschten Signal zu Rauschen-Verhältnis entspricht. Das Abschalten des Anregungslichts erfolgt auch, wenn die Anzahl der emittierten und registrierten Photonen einen unteren Grenzwert binnen eines vorgegebenen Teilzeitraums der maximalen Pixel Dwell Time nicht erreicht, weil dies darauf hinweist, dass sich an der jeweiligen Position des fokussierten Anregungslichts keine relevante Konzentration an Lumineszenzmarkern befindet. Auf diese Weise wird die Belastung der Probe mit Anregungslicht gegenüber einer Beaufschlagung der Probe mit derselben Lichtmenge in jeder Position des fokussierten Anregungslichts deutlich reduziert.

Aus T. Staudt et al.: Far-field optical nanoscopy with reduced number of state transition cycles, Optics Express Vol. 19, No. 6 , 14 March 2011, Seiten 5644 bis 5657 ist ein als RESCue-STED bezeichnetes Verfahren bekannt, das das von R A Hoebe et al. für die konfokale Fluoreszenzmikroskopie beschriebene Verfahren auf die STED-Fluoreszenzmikroskopie überträgt. Dadurch wird die Probe nur solange als nötig oder sinnvoll mit den hohen Intensitäten des Stimulationslichts beaufschlagt.

Aus der DE 10 2013 100 147 A1 ist ein Verfahren zum räumlich hoch aufgelösten Abbilden einer einen Luminophor aufweisenden Struktur einer Probe bekannt, bei dem die Probe in einem Messbereich mit einer ein lokales Minimum aufweisenden Intensitätsverteilung von Lumineszenzverhinderungslicht beaufschlagt wird. Danach wird die Probe in dem Messbereich mit Lumineszenzanregungslicht beaufschlagt, das den Luminophor aus einem elektronischen Grundzustand heraus in einen lumineszierenden Zustand anregt; und aus dem Messbereich emittiertes Lumineszenzlicht wird registriert. Das registrierte Lumineszenzlicht wird der Position des lokalen Minimums in der Probe zugeordnet. Mit dem Lumineszenzverhinderungslicht wird der elektronische Grundzustand des Luminophors so gestört, dass der Luminophor in dem gestörten elektronischen Grundzustand einen reduzierten Absorptionsquerschnitt für das Lumineszenzanregungslicht aufweist. Zusätzlich kann die Probe vor dem Registrieren des Lumineszenzlichts in dem Messbereich mit STED-Licht beaufschlagt werden, das ebenfalls ein lokales Minimum im Zentrum des Messbereichs aufweist. Wenn dieses lokale Minimum noch kleiner ist als das lokale Minimum der Intensitätsverteilung des Lumineszenzverhinderungslichts, kann hierdurch die räumliche Zuordnung des Lumineszenzlichts noch stärker eingegrenzt werden, wodurch die räumliche Auflösung bei der Abbildung der Struktur noch weiter erhöht wird. Die lokalen Minima des STED-Lichts und des Fluoreszenzverhinderungslichts sind in allen Positionen des lokalen Minimums der Intensitätsverteilung des Fluoreszenzverhinderungslichts in der Probe konzentrisch zueinander angeordnet.

Aus der DE 10 2013 114 860 B3 ist ein Verfahren zur Bestimmung der Orte einzelner Moleküle einer Substanz in einer Probe bekannt, bei dem sich die einzelnen Moleküle der Substanz in einem fluoreszenten Zustand befinden, in dem sie mit Anregungslicht zur Emission von Fluoreszenzlicht anregbar sind, und die Abstände der einzelnen Moleküle der Substanz einen Mindestwert einhalten. Die einzelnen Moleküle der Substanz werden mit Anregungslicht zur Emission von Fluoreszenzlicht angeregt, wobei eine Intensitätsverteilung des Annäherungslichts mindestens eine Nullstelle aufweist. Das Fluoreszenzlicht von den angeregten einzelnen Molekülen der Substanz wird für verschiedene Positionen der mindestens einen Nullstelle der Intensitätsverteilung des Anregungslichts registriert. Dabei sind die Abstände zwischen nächstbenachbarten Positionen der mindestens einen Nullstelle, in dem das Fluoreszenzlicht von den angeregten einzelnen Molekülen der Substanz registriert wird, nicht größer als der halbe Mindestwert. Dann werden die Orte der Einzelmoleküle der Substanz aus dem Verlauf der Intensität des Fluoreszenzlichts von dem jeweiligen Molekül über den Positionen der mindestens einen Nullstelle der Intensitätsverteilung des Anregungslichts in dem interessierenden Bereich der Probe abgeleitet.

Aus der WO 2010/069987 A1 ist ein Verfahren zur dynamischen Verlagerung eines Lichtstrahls gegenüber einer den Lichtstrahl fokussierenden Optik bekannt. Dieses Verfahren kann in der STED-Mikroskopie zur Anwendung kommen. Beim Abtasten der Probe können schnelle adaptive Rastermuster realisiert werden, die dunkle Hintergrundbereiche oder aus anderen Gründen uninteressante Objektbereiche auslassen, um durch eine reduzierte Bildpunkteanzahl eine höhere Bildwiederholungsrate zu erreichen.

Die US 2012/0104279 A1 beschreibt ein Fluoreszenzlichtrastermikroskop mit einer doppeltbrechenden chromatischen Strahlformungseinrichtung. Das Rastermikroskop ist insbesondere ein STED-Mikroskop. Durch die doppeltbrechende chromatische Strahlformungseinrichtung tritt sowohl Anregungslicht als auch STED-Licht hindurch, wobei die Strahlformungseinrichtung die Ausbildung eines Intensitätsmaximums des Anregungslichts im Fokus eines nachgeschalteten Objektivs nicht beeinträchtigt, hingegen aber zur Folge hat, dass das STED-Licht eine Intensitätsverteilung mit einem Intensitätsminimum am Ort des Intensitätsmaximums des Anregungs-lichts ausbildet.

Aus der EP 2 317 362 A1 ist ein mikroskopisches Verfahren mit gesteigerter Auflösung bekannt, bei dem eine Probe zweimal mit einem Intensitätsmaximum von Anregungslicht abgetastet wird, um zwei Bilder der Probe zu erzeugen. Dabei werden die Abtastpunkte, die den beiden Bildern zugrunde liegen, um eine Schrittweite unterhalb einer optischen Auflösungsgrenze des Verfahrens zueinander versetzt, und die resultierenden Unterschiede der Bilder werden zur Erzielung einer erhöhten räumlichen Auflösung ausgewertet. Ein entsprechendes Verfahren ist auch aus der DE 10 2013 017 468 A1 bekannt.

Aus der US 2013/0201558 A1 ist eine Strahlformungseinrichtung zur Formung eines Strahls mit einer zentralen Nullstelle bekannt. Diese Strahlformungseinrichtung kann in der STED-Mikroskopie Verwendung finden. Bei der Strahlformungseinrichtung ist ein Scanwinkel, der beim Abtasten einer Probe mit dem Strahl eingestellt wird, begrenzt, weil er die durch verschiedene Verzögerungsplatten zur Ausbildung der zentralen Nullstelle eingestellten relativen Verzögerungen des Strahls stört.

Aus der US 7,679,741 B2 ist ein Verfahren zur räumlich hochauflösenden Untersuchung von Proben bekannt, das zur RESOLFT-Mikroskopie mit schaltbaren Substanzen zählt. In einer Aus-führungsform weist das bekannte Verfahren das parallele Ausbildung mehrerer Nullstellen von Fluoreszenzverhinderungslicht aus, um die Probe parallel, d. h. zugleich in mehreren Teilbereichen, zu untersuchen.

### AUFGABE DER ERFINDUNG

Es ist die Aufgabe der Erfindung, Verfahren zum hochaufgelösten Abbilden einer mit Lumineszenzmarkern markierten Struktur in einer Probe sowie ein Rasterlumineszenzlichtmikroskop zur Durchführung solcher Verfahren aufzuzeigen, mit denen die Belastung der Lumineszenzmarker in der Probe durch hohe Lichtintensitäten grundsätzlich reduziert wird, so dass auch gegenüber hohen Lichtintensitäten empfindliche Lumineszenzmarker Verwendung finden können und eine Struktur in der jeweiligen Probe wiederholt abgebildet werden kann, um Reaktionen eines interessierenden Objekts auf veränderte Umgebungsbedingungen zu erfassen.

### LÖSUNG

Die Aufgabe der Erfindung wird durch Verfahren gemäß den unabhängigen Patentansprüchen gelöst. Die abhängigen Patentansprüche betreffen bevorzugte Ausführungsformen des ersten erfindungsgemäßen Verfahrens.

### BESCHREIBUNG DER ERFINDUNG

Bei einem erfindungsgemäßen Verfahren zum hochaufgelösten Abbilden einer mit Lumineszenzmarkern markierten Struktur in einer Probe wird Licht, das sich auf die Emission von Lumineszenzlicht durch die Lumineszenzmarker auswirkt, mit einer Intensitätsverteilung auf die Probe gerichtet, die eine von Intensitätsmaxima benachbarte Nullstelle aufweist. Abzutastende Teilbereiche der Probe werden mit der Nullstelle abgetastet, und aus dem Bereich der Nullstelle emittiertes Lumineszenzlicht wird registriert und dem Ort der Nullstelle in der Probe zugeordnet. Dabei werden mehrere Exemplare eines interessierenden Objekts jeweils überschneidend mit einem der abzutastenden Teilbereiche der Probe angeordnet und die mehreren Exemplare des interessierenden Objekts werden veränderten Umgebungsbedingungen unterworfen, um hierauf erfolgende Reaktionen des interessierenden Objekts zu erfassen. Die einzelnen Teilbereiche der Probe werden während und/oder vor und nach den veränderten Umgebungsbedingungen mit der jeweiligen Nullstelle abgetastet. Abmessungen der abzutastenden Teilbereiche der Probe sind in mindestens einer Richtung und vorzugsweise in jeder Richtung, in der die Nullstelle durch die Intensitätsmaxima begrenzt ist, auf nicht mehr als 75 % eines Abstands der Intensitätsmaxima in dieser Richtung begrenzt.

Soweit hier von Lumineszenzmarkern die Rede ist, kann es sich insbesondere um Fluoreszenzmarker handeln. Es können aber auch andere Lumineszenzmarker zum Einsatz kommen, deren Lumineszenzeigenschaften beispielsweise auf Chemilumineszenz oder Elektrolumineszenz basieren. Dies schließt ein, dass die Anregung der Lumineszenzmarker zur Emission von Lumineszenzlicht bei dem erfindungsgemäßen Verfahren nicht auf bestimmte Mechanismen festgelegt ist. Vielfach wird jedoch eine Anregung der Lumineszenzmarker zur Emission von Lumineszenzlicht durch Anregungslicht erfolgen.

Bei dem Licht, das sich auf die Emission von Lumineszenzlicht durch die Lumineszenzmarker auswirkt, kann es sich um Lumineszenzverhinderungslicht handeln, das die Emission von Lumineszenzlicht durch die Lumineszenzmarker verhindert, indem es beispielsweise die Lumineszenzmarker in einen Dunkelzustand überführt oder angeregte Lumineszenzmarker durch stimulierte Emission wieder abregt und so an der Emission von Lumineszenzlicht hindert. Bei dem Licht, das sich auf die Emission von Lumineszenzlicht durch die Lumineszenzmarker auswirkt, kann es sich aber auch um Licht handeln, das die Lumineszenzmarker aus einem nicht lumineszenten Zustand in einen weiteren nicht lumineszenten Zustand überführt, in dem sie vor Bleichen besonders gut geschützt sind. Weiterhin kann es sich bei dem Licht, das sich auf die Emission von Lumineszenzlicht durch die Lumineszenzmarker auswirkt, auch um solches handeln, das sich nicht allein sondern erst in Verbindung mit weiterem Licht so auf die Emission von Lumineszenzlicht durch die Lumineszenzmarker auswirkt, dass diese nur noch aus dem Bereich der Nullstelle der Intensitätsverteilung des Lichts erfolgt.

In einer anderen Ausführungsform handelt es sich bei dem Licht, das sich auf die Emission von Lumineszenzlicht durch die Lumineszenzmarker auswirkt, um Lumineszenzermöglichungslicht, das die Emission von Lumineszenzlicht durch die Lumineszenzmarker überhaupt erst ermöglicht, indem es beispielsweise die Lumineszenzmarker zur Lumineszenz anregt, also Lumineszenzanregungslicht ist, oder die Lumineszenzmarker aus einem Dunkelzustand in einen anregbaren Zustand überführt.

Bei der Nullstelle der Intensitätsverteilung des Lichts, das sich auf die Emission von Lumineszenzlicht durch die Lumineszenzmarker auswirkt, handelt es sich zumindest um ein lokales Intensitätsminimum des Lichts. Vielfach wird es sich um ein Intensitätsminimum handeln, in dem die Intensität des Lichts im Wesentlichen auf null zurückgeht. Im Idealfall geht die Intensität des Lichts im Zentrum der Nullstelle tatsächlich auf null zurück. Dies ist aber kein zwingendes Erfordernis. Wenn es sich bei dem Licht beispielsweise um Lumineszenzverhinderungslicht handelt, reicht es aus, wenn die Intensität des Lumineszenzverhinderungslichts im Bereich der Nullstelle so gering bleibt, dass sie zu keiner oder zumindest keiner wesentlichen, d. h. zumindest zu keiner überwiegenden, Verhinderung der Lumineszenz der Lumineszenzmarker führt. Die Nullstelle wird dabei durch die Bereiche begrenzt, in denen das Lumineszenzverhinderungslicht die Emission von Lumineszenzlicht durch die Lumineszenzmarker zumindest im Wesentlichen verhindert. Alles zwischen diesen Bereichen, in denen das Lumineszenzverhinderungslicht die Emission von Lumineszenzlicht durch die Lumineszenzmarker zumindest im Wesentlichen verhindert, wird hier mit "Nullstelle" oder "Bereich der Nullstelle" bezeichnet.

Wenn hier von den Intensitätsmaxima, die der Nullstelle der Intensitätsverteilung des sich auf die Emission von Lumineszenzlicht durch die Lumineszenzmarker auswirkenden Lichts benachbart sind, im Plural die Rede ist, so soll hierdurch nicht der Fall ausgeschlossen sein, dass die Nullstelle von einem sich beispielsweise ringförmig um die Nullstelle erstreckenden Intensitätsmaximum umschlossen ist. In jedem Schnitt durch die Intensitätsverteilung des sich auf die Emission von Lumineszenzlicht auswirkenden Lichts zeigt sich ein solches ringförmiges Intensitätsmaximum in Form von zwei Intensitätsmaxima, die der Nullstelle in dem Schnitt auf beiden Seiten benachbart sind.

Die Nullstelle kann in ein, zwei oder drei Richtungen von den Intensitätsmaxima benachbart sein. Es kann sich also um eine ebenen- , linien- oder punkförmige Nullstelle handeln. Dabei kann die Nullstelle eine zwei- oder eindimensionale Probe so schneiden, dass auch eine linien- oder punktförmige Nullstelle in den Dimensionen der Probe allseitig von den Intensitätsmaxima benachbart ist. Zudem können die abzutastenden Teilbereiche der Probe mit einer Nullstelle, die nicht in allen Dimensionen der Probe von den Intensitätsmaxima benachbart ist, in unterschiedlichen Richtungen abgetastet werden, um die Ortsauflösung beim Abbilden in allen Richtungen zu maximieren. Die Beschränkung der Abmessungen der abzutastenden Teilbereiche der Probe erfolgt bei dem erfindungsgemäßen Verfahren in mindestens einer Richtung und vorzugsweise in allen Richtungen, in der/denen die Nullstelle in der Probe von den Intensitätsmaxima benachbart ist.

Die der Nullstelle in der Probe benachbarten Intensitätsmaxima sind vielfach von viel höherer Lichtintensität als die Bereiche der Intensitätsverteilung des sich auf die Emission von Lumineszenzlicht durch die Lumineszenzmarker auswirkenden Lichts, die direkt an die Nullstelle angrenzen und in denen sich das Licht bereits in der angestrebten Weise auf die Emission von Lumineszenzlicht durch die Lumineszenzmarker auswirkt, indem es diese Emission beispielsweise verhindert. Die sehr hohen Intensitäten im Bereich der Intensitätsmaxima sind Folge der insgesamt hohen Intensität des Lichts, welche wiederum Voraussetzung dafür ist, dass der Bereich der Nullstelle, in dem sich das Licht auf die Emission von Lumineszenzlicht durch die Lumineszenzmarker zumindest im Wesentlichen nicht auswirkt, stark räumlich eingegrenzt wird. In der Konsequenz verbleiben zwischen den die Nullstelle unmittelbar begrenzenden Bereichen und den Intensitätsmaxima der Intensitätsverteilung Zwischenbereiche, in denen die Lichtintensität deutlich unterhalb der Lichtintensität in den Intensitätsmaxima liegt. Diese Zwischenbereiche werden bei dem erfindungsgemäßen Verfahren gezielt genutzt, indem die Abmessungen der abgetasteten Teilbereiche der Probe 75 % des Abstands der Intensitätsmaxima in dieser Richtung nicht überschreiten. Wenn die Abmessungen der abgetasteten Teilbereiche in der jeweiligen Richtung kleiner bleiben als 50 % des Abstands der Intensitätsmaxima in der jeweiligen Richtung, wird kein Punkt der abgetasteten Teilbereiche der vollen Intensität des Lichts in den Intensitätsmaxima ausgesetzt. Aber auch schon bei einer Beschränkung auf 75 % des Abstands ergibt sich eine signifikante Beschränkung der mittleren Intensität des sich auf die Emission von Lumineszenzlicht auswirkenden Lichts, mit der die abzutastenden Teilbereiche der Probe beaufschlagt werden. Es versteht sich, dass die mittlere Intensität des Lichts, mit der die abzutastenden Teilbereiche der Probe beaufschlagt werden, umso weiter zurückgeht, desto weiter seine Abmessungen unter dem Abstand der Intensitätsmaxima in der jeweiligen Richtung bleiben. Absolut können die Abmessungen der abzutastenden Teilbereiche in der jeweiligen Richtung zwischen den Intensitätsmaxima maximal 300 nm, vorzugsweise maximal 200 nm und noch mehr bevorzugt etwa 100 nm betragen. Diese absoluten Angaben beziehen sich auf Wellenlängen des Lumineszenzlichts, des sich auf die Emission von Lumineszenzlicht durch die Lumineszenzmarker auswirkenden Lichts und/oder von etwaigem Anregungslicht im sichtbaren Bereich.

Bei den abzutastenden Teilbereichen der Probe kann es sich um Teilbereiche der Probe handeln, die bei einer Durchführung des erfindungsgemäßen Verfahrens allein, d. h. ausschließlich, abgetastet werden und die entsprechend auf interessierende Bereich der Probe, die mit den mehreren Exemplaren des interessierenden Objekts überlappen, ausgerichtet werden.

Bei dem erfindungsgemäßen Verfahren können grundsätzlich alle Exemplare des interessierenden Objekts den gleichen veränderten Umgebungsbedingungen unterworfen werden. Bevorzugt ist es jedoch, verschiedene Teilmengen der mehreren Exemplare des interessierenden Objekts in der Probe unterschiedlichen veränderten Umgebungsbedingungen zu unterwerfen. Dies ermöglicht es insbesondere, unterschiedliche Reaktionen des interessierenden Objekts auf die unterschiedlichen veränderten Umgebungsbedingungen zu erfassen und miteinander zu vergleichen. Dabei können die Reaktionen sowohl in Bezug auf das Reaktionsergebnis als auch die Reaktionsgeschwindigkeit unterschiedlich sein. Dabei erweist es sich als vorteilhaft, dass das erfindungsgemäße Verfahren auch schnellere Wiederholungen des Abtastens der abzutastenden Teilbereiche mit der Nullstelle ermöglicht.

Bei den Umgebungsbedingungen, denen die Exemplare des interessierenden Objekts bei dem erfindungsgemäßen Verfahren ausgesetzt werden, kann es sich um unterschiedliche physikalische Umgebungsbedingungen handeln, beispielsweise unterschiedliche Temperaturen, unterschiedliche elektrische, magnetische und elektromagnetische Felder und dergleichen. Die Umgebungsbedingungen können aber auch durch Hinzufügen einer chemischen Substanz verändert werden, also unterschiedliche chemische Umgebungsbedingungen umfassen. In einer konkreten Ausführungsform kann mit dem erfindungsgemäßen Verfahren ein Drug Screening durchgeführt werden, bei dem nach Substanzen gesucht wird, die gewünschte Reaktionen bei dem interessierenden Objekt hervorrufen. Dazu können viele Exemplare des interessierenden Objekts einzeln oder in größeren Teilmengen gegenüber unterschiedlichen Substanzen ausgesetzt werden, die auf ihre Eignung zum Hervorrufen der gewünschten Reaktion untersucht werden. Durch die hohe räumliche Auflösung des erfindungsgemäßen Verfahren ist es dabei beispielsweise möglich, räumliche Änderungen des interessierenden Objekts infolge des Einwirkens der jeweiligen Substanz zu erfassen, die mit vielen anderen Verfahren nicht oder nur indirekt und dann mit entsprechend größerem Aufwand zu erfassen sind.

Um beispielsweise das angesprochene Drug Screening besonders effizient durchzuführen, werden die mehreren Exemplare des interessierenden Objekts bei dem zweiten erfindungsgemäßen Verfahren in einem gegenüber Fixpunkten der Probe definierten Muster angeordnet. Dann ist es sehr effizient möglich, die abzutastenden Teilbereiche der Probe mit der Nullstelle relativ zu den Fixpunkten der Probe anzufahren. Dies kann auch vollautomatisiert geschehen. Das Anordnen der interessierenden Objekte in dem Muster kann beispielsweise mithilfe einer Immunreaktion oder dergleichen erfolgen.

Bei dem erfindungsgemäßen Verfahren werden die abzutastenden Teilbereiche der Probe in aller Regel wiederholt mit der Nullstelle abgetastet, um die Reaktionen des interessierenden Objekts auf die sich verändernden Umgebungsbedingungen zu erfassen. Dabei ist es bevorzugt, zumindest bei einer Wiederholung des Abtastens der abzutastenden Teilbereiche der Probe, die Nullstelle an nicht mehr als 3n oder sogar nicht mehr als 2n Orten je abzutastendem Teilbereich anzuordnen, wobei n die Anzahl der Raumrichtungen ist, in denen die abzutastenden Teilbereiche der Probe abgetastet werden, um das interessierende Objekt hochaufgelöst abzubilden. Derart wenige Orte der Nullstelle sind ausreichend, um den Ort von einzelnen Lumineszenzmarkern in den einzelnen abzutastenden Teilbereichen zu erfassen, wenn das für jeden abzutastenden Teilbereich registrierte Lumineszenzlicht jeweils einem bestimmten dieser Lumineszenzmarker zugeordnet werden kann. Eine solche Zuordnung ist möglich, wenn zu jeder Zeit nur einer der Lumineszenzmarker das Lumineszenzlicht emittiert, d. h. eine zeitliche Unterscheidung möglich ist, oder wenn das Lumineszenzlicht beispielsweise aufgrund seiner Wellenlänge einzelnen Lumineszenzmarkern zugeordnet werden kann. Diese Ausführungsform des erfindungsgemäßen Verfahrens macht also von dem als MINFLUX bekannten Verfahren Gebrauch. Bei MINFLUX wird zum Bestimmen des Ortes eines einzelnen Lumineszenzmarkers in einer Ebene eine Nullstell einer Lichtintensitätsverteilung von Anregungslicht an vier verschiedenen Orten in der Probe positioniert und dazu die Intensität des Lumineszenzlichts von dem Lumineszenzmarker erfasst.

Bei dem interessierenden Objekt, das in mehreren Exemplaren in der Probe angeordnet wird, kann es sich um ein Molekül, beispielsweise ein Proteinmolekül, einen Komplex, aber auch um eine komplexere biologische Einheit wie eine Synapse, eine Membran, einen anderen Zellbestandteil oder ein ganzes Virus handeln.

Die Abfolge der aufeinanderfolgenden Abtastungen der Teilbereiche mit der jeweiligen Nullstelle kann sehr schnell sein, so dass auch schnelle Veränderungen bei dem interessierenden Objekt erfasst werden können.

Die Erfindung nimmt bewusst in Kauf, dass die abgetasteten und damit abgebildeten Teilbereiche der Probe sehr klein bleiben. Vielfach erstrecken sie sich über eine Entfernung von der Größenordnung der Beugungsgrenze bei der Wellenlänge des sich auf die Emission von Lumineszenzlicht durch die Lumineszenzmarker auswirkenden Lichts. Durch die erhebliche Reduzierung der sich im Mittel auf die abgetasteten Teilbereiche auswirkenden Lichtintensitäten wird es jedoch möglich, auch relativ stark zum Bleichen neigende Lumineszenzmarker erfolgreich einzusetzen bzw. die abgetasteten Teilbereiche der Probe wiederholt mit der Nullstelle der Intensitätsverteilung abzutasten.

Die Möglichkeit, die Probe in den Teilbereichen schnell wiederholt mit der Nullstelle der Intensitätsverteilung abzutasten, ermöglicht es auch, dynamische Vorgänge bei der interessierenden Struktur in der Probe zeitlich aufzulösen. Da die Lumineszenzmarker in der Probe durch das erfindungsgemäße Verfahren besonders wenig zum Bleichen neigen, also besonders viele Photonen von jedem einzelnen Fluoreszenzmarker in jedem abzutastenden Teilbereich der Probe erhalten werden, können besonders viele Bilder jedes abzutastenden Teilbereichs der Probe aufgenommen werden und damit auch längerfristige Veränderungen der interessierenden Struktur in der Probe beobachtet werden. In der Regel wird ein Teilbereich der Probe bei dem erfindungsgemäßen Verfahren in nicht mehr als 100 x 100 = 10.000 Bildpunkten abgetastet. Dies ist in wenigen Millisekunden möglich. Damit können Bildfrequenzen von 100 Hz und mehr realisiert werden.

Bei dem erfindungsgemäßen Verfahren kann ein abzutastender Teilbereich der Probe aber auch mit nur sehr wenigen Positionen der Nullstelle in der Probe abgetastet werden, um beispielsweise die Verlagerung eines einzelnen Fluoreszenzmarkers in der Probe aufgrund von veränderten Umgebungsbedingungen zu erfassen.

Vorteilhafterweise sind die Abmessungen der abzutastenden Teilbereiche der Probe in jeder Richtung, in der die Intensitätsmaxima der Nullstelle in der Probe benachbart sind, nicht größer als 45 %, 25 % oder gar 10 % des Abstands der Intensitätsmaxima in dieser Richtung. Bezogen auf die Intensität des sich auf die Emission von Lumineszenzlicht durch die Lumineszenzmarker auswirkenden Lichts ist es vorteilhaft, wenn die Abmessungen der abzutastenden Teilbereiche der Probe in jeder Richtung, in der die Intensitätsmaxima der Nullstelle in der Probe benachbart sind, nicht größer als die Strecke sind, über die die Intensität des Lichts ausgehend von der Nullstelle in der jeweiligen Richtung auf 50 %, 25 %, 10 % oder 5 % der Intensität des Lichts in den benachbarten Intensitätsmaxima ansteigt. Entsprechend wird dann auch die maximale Belastung der Lumineszenzmarker in dem abzutastenden Bereich auf 50 %, 25 %, 10 % oder 5 % der Intensität des Lichts in den angrenzenden Intensitätsmaxima beschränkt.

Bei dem erfindungsgemäßen Verfahren ist es vielfach sinnvoll, die mit den Lumineszenzmarkern markierten Exemplare des interessierenden Objekts in der Probe vor dem Abtasten der abzutastenden Teilbereiche der Probe mit der Nullstelle auf andere Weise abzubilden, um die Lage der abzutastenden Teilbereiche der Probe festzulegen. Die abzutastenden Teilbereiche der Probe sind die Teilbereich der Probe, die mit den Exemplaren des interessierenden Objekts so überlappen, dass in ihnen besondere Details des Objekts oder auch Entwicklungen des Objekts aufgrund der geänderten Umgebungsbedingungen auftreten. Dieses Abbilden kann unter lokaler oder großflächiger Anregung der Lumineszenzmarker zur Emission von Lumineszenzlicht erfolgen.

Vor dem Abtasten der abzutastenden Teilbereiche der Probe kann auch ein größerer Bereich der Probe mit der Nullstelle mit einer um mindestens 50 % geringeren Intensität des sich auf die Emission von Lumineszenzlicht auswirkenden Lichts und/oder mit einer um mindestens 50 % höheren Abtastgeschwindigkeit abgetastet werden, um die Lage der abzutastenden Teilbereiche der Probe festzulegen. Bei diesem vorhergehenden Abtasten werden zwar alle Punkte des größeren Bereichs der Probe mit der hohen Intensität des Lichts im Bereich der Intensitätsmaxima beaufschlagt. Dafür wird aber diese Intensität gezielt zurückgenommen, und/oder sie wirkt nur über kürzere Zeit auf die Lumineszenzmarker ein.

In einer Ausführungsform der erfindungsgemäßen Verfahren werden zum Abtasten eines größeren Bereichs der Probe andere Abtastmittel verwendet als zum Abtasten der einzelnen abzutastenden Teilbereiche der Probe.

Bei Verwendung unterschiedlicher Abtastmittel zum Abtasten des größeren Bereichs der Probe, um die abzutastenden Teilbereiche der Probe festzulegen, und zum anschließenden Abtasten der abzutastenden Teilbereiche der Probe können auf das Abtasten der einzelnen eng begrenzten abzutastenden Teilbereiche der Probe speziell abgestimmte Abtastmittel zum Einsatz kommen. Aufgrund der geringen Abmessungen der abzutastenden Teilbereiche in der Probe können dies Abtastmittel sein, die keine großen Verlagerungen der Lichtintensitätsverteilung mit der Nullstelle ermöglichen, die aber die von ihnen abdeckbaren Verlagerungen sehr schnell und/oder präzise umsetzen. So kann ein sehr schnell wiederholtes Abtasten der abzutastenden Teilbereiche erfolgen, um beispielsweise schnelle Veränderungen der interessierenden Objekte in den Teilbereichen zu verfolgen.

Konkret kann zum Abtasten des größeren Bereichs der Probe in mindestens einer Richtung eine Probenhalterung für die Probe relativ zu einem Objektiv bewegt werden, mit dem das Licht auf die Probe gerichtet wird, während zum Abtasten der einzelnen abzutastenden Teilbereiche der Probe in mindestens einer Richtung ein elektro-optischer Scanner, ein akusto-optischer Deflektor oder ein Galvospiegel, d.h. ein Ablenkspiegel mit Galvanometerantrieb, verwendet wird. Die Einrichtung zum Abtasten der einzelnen abzutastenden Teilbereiche der Probe kann mit einem zusätzlichen elektro-optischen oder akusto-optischen Modulator als Phasenschieber zur Verlagerung der Nullstelle der Lichtintensitätsverteilung kombiniert werden.

Wie schon angesprochen wurde, kann es sich bei dem sich auf die Emission von Lumineszenzlicht durch die Lumineszenzmarker auswirkenden Licht insbesondere um Lumineszenzverhinderungslicht handeln, das außerhalb der Nullstelle die Emission von Lumineszenzlicht durch die Lumineszenzmarker verhindert. Beispielsweise überführt oder schaltet das Lumineszenzverhinderungslicht Lumineszenzmarker in Form von schaltbaren Proteinen in einen Dunkelzustand, in dem sie nicht zur Emission von Lumineszenzlicht anregbar sind. Das Lumineszenzverhinderungslicht kann insbesondere zusammen mit Anregungslicht auf die Probe gerichtet werden, das die Lumineszenzmarker zur Emission von Lumineszenzlicht anregt und das eine Intensitätsverteilung mit einem Intensitätsmaximum im Bereich der Nullstelle des Lumineszenzverhinderungslichts aufweist. Dies entspricht bis auf die engen Grenzen für die abzutastenden Teilbereiche der Probe dem üblichen Vorgehen bei der STED-, RESOLFT- oder GSD-Fluoreszenzlichtmikroskopie.

Bei dem ersten erfindungsgemäßen Verfahrens wird das aus der WO 2014/108455 A1 bekannte Konzept, STED-Fluoreszenzmikroskope mit schaltbaren Lumineszenzmarkern durchzuführen, um die Lumineszenzmarker durch Schalten in einen inaktiven Zustand vor den hohen Intensitäten im Bereich des Intensitätsmaxima des Stimulationslichts zu schützen, in abgewandelter Form angewandt. Konkret wird dazu vor dem Abtasten der abzutastenden Teilbereiche der Probe mit der Nullstelle zusätzliches Ausschaltlicht mit einer solchen Intensitätsverteilung auf die Probe gerichtet, dass es die schaltbaren Lumineszenzmarker in an die abzutastenden Teilbereiche angrenzenden Teilbereichen der Probe in einen inaktiven Zustand ausschaltet. Diese angrenzenden Teilbereiche grenzen in der mindestens einen Richtung, in der die Intensitätsmaxima der Nullstelle des Stimulationslichts in der Probe benachbart sind, an die abzutastenden Teilbereiche an. Damit werden die Lumineszenzmarker dort in den inaktiven Zustand geschaltet, wo die Intensitätsmaxima des Stimulationslichts auftreten und wo ohne diese Schutzmaßnahme die Lumineszenzmarker durch die hohen Intensitäten des Stimulationslichts beim Abtasten der abzutastenden Teilbereiche der Probe weggeblichen würden. Indem das Bleichen der Lumineszenzmarker bei dieser Ausführungsform des erfindungsgemäßen Verfahrens entfällt, kann es sukzessive auch für direkt nebeneinanderliegende oder einander sogar überlappende abzutastende Teilbereiche durchgeführt werden. Anders gesagt kann die Probe mit den abzutastenden Teilbereichen abgetastet werden, wobei die abzutastenden Teilbereiche an allen oder zumindest an ausgewählten Positionen in der Probe ihrerseits mit der Nullstelle abgetastet werden.

Die Intensitätsverteilung des Ausschaltlichts kann in dem jeweils anschließend abzutastenden Teilbereich ein durch destruktive Interferenz ausgebildetes lokales Intensitätsminimum aufweisen, in dem sie die Lumineszenzmarker zumindest im Wesentlichen nicht ausschaltet, d. h., in dem sie die Lumineszenzmarker zumindest im Wesentlichen in ihrem aktiven Zustand belässt, in dem sie durch das Anregungslicht anregbar sind. Je nach Auswahl der schaltbaren Lumineszenzmarker kann es dieser aktive Zustand erfordern oder zumindest sinnvoll machen, dass vor und/oder zeitlich überlappend mit dem Richten des Ausschaltlichts auf die Probe Einschaltlicht auf den jeweils abzutastenden Teilbereich der Probe gerichtet wird, das die schaltbaren Lumineszenzmarker in ihren aktiven Zustand einschaltet.

Beim Einschalten und/oder Ausschalten emittieren schaltbare Lumineszenzmarker vielfach ebenfalls Lumineszenzlicht. Dieses Lumineszenzlicht kann bei dem erfindungsgemäßen Verfahren registriert und ausgewertet werden. Ziel dieser Auswertung kann beispielsweise eine Entscheidung darüber sein, ob der von dem jeweils angrenzenden Teilbereich begrenzte abzutastende Teilbereich überhaupt mit der Nullstelle abgetastet wird oder ob er nur insgesamt mit Anregungslicht beaufschlagt wird, wobei das dann emittierte Lumineszenzlicht konfokal registriert wird, oder ob er gar nicht mit Anregungslicht beaufschlagt wird, weil die geringe Intensität des beim Einschalten und/oder Ausschalten registrierten Lumineszenzlichts darauf hinweist, dass keine relevante Konzentration an Lumineszenzmarkern in dem jeweiligen abzutastenden Teilbereich vorliegt. Weiter kann die Auswertung das Ziel haben, festzulegen, unter welchen Bedingungen das Richten des Stimulationslichts auf die Probe in jeder Position der Nullstelle in dem von den angrenzenden Teilbereichen begrenzten abzutastenden Teilbereichen und das Registrieren des aus dem Bereich der Nullstelle emittierten Lumineszenzlichts sinnvollerweise abgebrochen wird. Das heißt, es kann zum Beispiel ein oberer und/oder unterer Grenzwert für die Durchführung eines RESCue-Verfahrens in dem jeweiligen abzutastenden Teilbereich abhängig von dem Ergebnis der Auswertung festgelegt werden.

In einer speziellen Ausführungsform der erfindungsgemäßen Verfahren wird aus dem Bereich der Nullstelle emittiertes Lumineszenzlicht mit einem Punktsensor registriert, dessen Lage gegenüber der Probe beim Abtasten des jeweiligen abzutastenden Teilbereichs der Probe nicht verändert wird. Das heißt, beim Registrieren des Lumineszenzlichts mit dem Punktsensor wird die Lageveränderung der Nullstelle der Lichtintensitätsverteilung des sich auf die Emission von Lumineszenzlicht durch die Lumineszenzmarker auswirkenden Lichts nicht berücksichtigt. Dies ist möglich, weil die Abmessungen der abzutastenden Teilbereiche regelmäßig kleiner als der Erfassungsbereich eines Punktsensors bezogen auf die Probe sind. Dies gilt auch für einen zum Mittelpunkt des jeweiligen abzutastenden Teilbereichs konfokal angeordneten Punktsensor. Selbst diesen erreicht regelmäßig das Lumineszenzlicht aus dem gesamten abzutastenden Teilbereich der Probe, weil dessen Abmessungen regelmäßig unterhalb der Beugungsgrenze bei der Wellenlänge des Lumineszenzlichts liegen. Der lagefeste Punktsensor bedeutet, dass die Nullstelle zum Abtasten des jeweiligen abzutastenden Teilbereichs der Probe durch Einwirken allein auf das sich auf die Emission von Lumineszenzlicht durch die Lumineszenzmarker auswirkende Licht verlagert wird. Auch etwaiges Anregungslicht muss nicht zusammen mit dem sich auf die Emission von Lumineszenzlicht durch die Lumineszenzmarker auswirkenden Licht verlagert werden, da sich auch sein Intensitätsmaximum typischerweise über den gesamten abzutastenden Teilbereich der Probe erstreckt.

Wie ebenfalls schon angesprochen wurde, kann es sich bei dem sich auf die Emission von Lumineszenzlicht durch die Lumineszenzmarker auswirkenden Licht alternativ um Lumineszenzermöglichungslicht handeln, das außerhalb der Nullstelle die Emission von Lumineszenzlicht durch die Lumineszenzmarker überhaupt erst ermöglicht. Dies schließt ein, dass es sich bei dem Licht um Lumineszenzanregungslicht als einziges Licht handelt, das auf die Probe gerichtet wird. Es schließt auch ein, dass das Licht Lumineszenzaktivierungslicht ist, das die Lumineszenzmarker aus einem Dunkelzustand in einen zur Lumineszenz anregbaren Zustand überführt, d. h. aktiviert. Das Licht, das sich auf die Emission von Lumineszenzlicht durch die Lumineszenzmarker auswirkt, kann auch beide Funktionen, d. h. des Aktivierens und des Anregens, haben und dazu auch zwei Komponenten unterschiedlicher Wellenlängen aufweisen. Wenn dann ein Teilbereich der Probe mit der Nullstelle der Intensitätsverteilung des Lichts, das sich auf die Emission von Lumineszenzlicht durch die Lumineszenzmarker auswirkt, abgetastet wird, wird dieser Teilbereich erfindungsgemäß klein gehalten, um die in dem Teilbereich befindlichen Lumineszenzmarker nicht oder doch zumindest möglichst wenig mit den hohen Lichtintensitäten im Bereich der an die Nullstelle angrenzenden Intensitätsmaxima zu beaufschlagen. Das Erfassen des von den Lumineszenzmarkern in der Probe emittierten Lumineszenzlichts erfolgt bei dieser Ausführungsform des erfindungsgemäßen Verfahrens typischerweise mit einer Kamera, und die Auswertung erfolgt durch Entfalten der registrierten Intensitätsverteilungen im Hinblick auf die aktuelle Lage der Nullstelle in der Probe und der damit verbundenen Änderung der Intensitätsverteilung des aus der Probe emittierten und mit der Kamera erfassten Lumineszenzlichts.

Wenn in den abzutastenden Teilbereichen jeweils nur ein Lumineszenzmarker das erfasste Lumineszenzlicht aus der Probe emittiert, kann dessen Position in der Probe auch sehr einfach aus dem für die verschiedenen Orte der Nullstelle registrierten Lumineszenzlicht ermittelt werden, beispielsweise durch Anfitten einer ein lokales Extremum aufweisenden Funktion, wobei der Ort des Extremums der angefitteten Funktion der gesuchten Position des Lumineszenzmarkers gleichgesetzt wird. Dieses Vorgehen ist sowohl dann möglich, wenn es sich bei dem Licht, das sich auf die Emission von Lumineszenzlicht durch die Lumineszenzmarker auswirkt und dessen Intensitätsverteilung die Nullstelle aufweist, Lumineszenzverhinderungslicht ist, als auch dann, wenn es sich hierbei um Lumineszenzermöglichungs- oder Anregungslicht handelt. Im ersten Fall wird durch die an die Nullstelle angrenzenden Intensitätsmaxima des Lumineszenzverhinderungslichts in vorteilhafter Weise verhindert, dass von in der Nähe befindlichen anderen Lumineszenzmarkern emittiertes Lumineszenzlicht die Positionsbestimmung stört. Im zweiten Fall wird der jeweilige Lumineszenzmarker in dem abzutastenden Teilbereich nur mit einer minimalen Lichtmenge beaufschlagt und dadurch nur minimal photochemisch belastet.

Der Nachteil der erfindungsgemäßen Verfahren, dass der abgetastete und damit abgebildete Teilbereich der Probe jeweils sehr klein bleibt, kann zumindest teilweise dadurch kompensiert werden, dass die Probe in mehreren Teilbereichen zugleich abgetastet wird. Dabei kann insbesondere ein Raster von Nullstellen des sich auf die Emission von Lumineszenzlicht durch die Lumineszenzmarker auswirkenden Lichts zum Einsatz kommen, wie es grundsätzlich bekannt ist. Dabei wird das Raster der Nullstellen erfindungsgemäß aber nicht so weit verschoben, dass die Probe insgesamt abgebildet wird, d. h. über das volle Rastermaß. Vielmehr bleiben die einzelnen Teilbereiche, in denen die Probe abgetastet wird, auch bei dieser Ausführungsform des erfindungsgemäßen Verfahrens voneinander getrennt. Nur so wird die erfindungsgemäße Reduktion der Gefahr des Bleichens der Lumineszenzmarker in den abgetasteten Teilbereichen der Probe erreicht. Es versteht sich, dass dann, wenn diese parallelisierte Ausführungsform der Erfindung mit schaltbaren Lumineszenzmarkern durchgeführt wird, die jeweils nur in den abzutastenden Teilbereichen der Probe in ihrem fluoreszenten Zustand sind, die Probe ergänzend auch mit den abzutastenden Teilbereichen abgetastet werden kann, um sie vollständig abzubilden.

Da bei dem erfindungsgemäßen Verfahren mehrere Exemplare des interessierenden Objekts jeweils überschneidend mit einem der mehreren abzutastenden Teilbereiche der Probe angeordnet werden, wird beim Abtasten jedes Teilbereichs ein Teilbild dieses Objekts gewonnen. Wenn diese Teilbilder statistisch über das Objekt verteilt sind und ihre Zahl ausreichend groß ist, kann aus ihnen ein Abbild des gesamten interessierenden Objekts rekonstruiert werden. Es versteht sich, dass dies voraussetzt, dass die verschiedenen Exemplare des interessierenden Objekts zumindest weitgehend übereinstimmen. Zur Zuordnung der Teilbilder zu bestimmten Punkten des interessierenden Objekts können die Exemplare des interessierenden Objekts in der Probe zusätzlich auf andere Weise abgebildet werden, um ihre Lage und Ausrichtung gegenüber den abgetasteten Teilbereichen der Probe zu bestimmen.

Ein Rasterlumineszenzlichtmikroskop zur Durchführung des erfindungsgemäßen Verfahrens weist eine Lichtquelle für das Licht, das sich auf die Emission von Lumineszenzlicht durch die Lumineszenzmarker auswirkt, Lichtformungsmittel, die das Licht mit der Intensitätsverteilung auf die Probe richten, welche die von den Intensitätsmaxima benachbarte Nullstelle aufweist, Abtastmittel, um einen abzutastenden Teilbereich der Probe mit der Nullstelle abzutasten, einen Detektor, der aus dem Bereich der Nullstelle emittiertes Lumineszenzlicht registriert, und eine Steuerung zur Durchführung der erfindungsgemäßen Verfahren auf.

Der Detektor kann ein Punktdetektor sein, wobei die Lage des Punktdetektors gegenüber der Probe beim Abtasten des abzutastenden Teilbereichs der Probe fest sein kann, d. h. das aus der Probe emittierte Lumineszenzlicht erfassen kann, ohne dass dieses entscannt wird, weil der abzutastende Teilbereich in der Regel Abmessungen unterhalb der Beugungsgrenze aufweist. Dann können weitere Abtastmittel vorhanden sein, die sich von den Abtastmitteln zum Abtasten des abzutastenden Teilbereichs der Probe mit der Nullstelle unterscheiden und zum Abtasten eines größeren Bereichs der Probe vorgesehen sind.

Auch hier können die Abtastmittel zum Abtasten des größeren Bereichs der Probe in mindestens einer Richtung eine relativ zu einem Objektiv der Lichtformungsmittel bewegliche Probenhalterung aufweisen, während die Abtastmittel zum Abtasten des abzutastenden Teilbereichs der Probe in mindestens einer Richtung einen elektro-optischen Scanner, einen akusto-optischer Deflektor oder einen Galvospiegel umfassen können.

Der Detektor kann aber beispielsweise auch ein Punktdetektor sein, der das entscannte Lumineszenzlicht von der Probe erfasst, oder ein flächiger Detektor, wie eine Kamera, der das nicht entscannte Lumineszenzlicht aus einer festen Relativposition zu der Probe erfasst.

Bei einem Rasterlumineszenzlichtmikroskop zur Durchführung eines erfindungsgemäßen STED-Verfahrens ist das von der Lichtquelle bereitgestellte Licht Stimulationslicht, und es ist eine weitere Lichtquelle für Anregungslicht vorgesehen, wobei die Lichtformungsmittel das Anregungslicht mit einer Lichtintensitätsverteilung auf die Probe richten, die ein Maximum im Bereich der Nullstelle des Lumineszenzverhinderungslichts aufweist.

Zur Durchführung des erfindungsgemäßen Verfahrens, das von schaltbaren Lumineszenzmarkern Gebrauch macht, ist bei dem Rasterlumineszenzlichtmikroskop zusätzlich eine Ausschaltlichtquelle für Ausschaltlicht vorzusehen, wobei die Lichtformungsmittel das Ausschaltlicht mit einer solchen Intensitätsverteilung auf die Probe richten, dass es die schaltbaren Lumineszenzmarker in einem an den abzutastenden Teilbereich angrenzenden Teilbereich der Probe in einen inaktiven Zustand ausschaltet. Der angrenzende Teilbereich grenzt dabei in der mindestens einen Richtung, in der die Intensitätsmaxima der Nullstelle des Stimulationslichts in der Probe benachbart sind, an den abzutastenden Teilbereich an. Darüber hinaus kann eine Einschaltlichtquelle für Einschaltlicht vorgesehen sein, das die schaltbaren Lumineszenzmarker in ihren aktiven Zustand einschaltet, wobei die Lichtformungsmittel das Einschaltlicht vor und/oder zeitlich überlappend mit dem Richten des Ausschaltlichts auf die Probe auf einen den abzutastenden Teilbereich umfassenden Teilbereich der Probe richten.

Bei experimentellen Erprobungen des erfindungsgemäßen Verfahrens wurde eine Erhöhung der Ausbeute der Photonen von den Lumineszenzmarkern in der Probe um einen Faktor > 100 erzielt. Dies z. B. bedeutet, dass 100 mal mehr Bilder einer sich verändernden interessierenden Struktur aufgenommen werden können, um die Veränderungen zu dokumentieren. Für jedes einzelne Bild wird zudem weniger Zeit benötigt, weil auch anhaltend mehr Photonen pro Zeiteinheit von den Lumineszenzmarkern in der Probe emittiert werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch Intensitätsverteilungen von Anregungslicht und von Fluoreszenzverhinderungslicht als Beispiel für Licht, das sich auf die Emission von Lumineszenzlicht durch in einer Probe angeordnete Lumineszenzmarker auswirkt, sowie die resultierende effektive Anregung von Fluoreszenzmarkern in einer Probe zur Emission von Fluoreszenzlicht.
- **Fig. 2**: zeigt für die Intensitätsverteilung des Fluoreszenzverhinderungslichts gemäß Fig. 1 Abmessungen eines mit den Intensitätsverteilungen gemäß Fig. 1 bei einem erfindungsgemäßen Verfahren abzutastenden Teilbereichs einer Probe.
- **Fig. 3**: ist eine schematische Darstellung eines abzutastenden Teilbereichs einer Probe in einer Draufsicht, wobei das Abtasten längs einer mäanderförmigen Bahn erfolgt.
- **Fig. 4**: ist eine schematische Darstellung eines abzutastenden Teilbereichs einer Probe in einer Draufsicht, wobei das Abtasten längs einer Spiralbahn erfolgt.
- **Fig. 5**: illustriert schematisch ein Fluoreszenzmikroskop als Beispiel für ein Rasterlumineszenzlichtmikroskop zur Durchführung des erfindungsgemäßen Verfahrens.
- **Fig. 6**: zeigt (a) ein vorab aufgenommenes Konfokalbild einer Probe und (b) ein Teilbild der Probe, das erfindungsgemäß aufgenommen wurde, nachdem einzelne abzutastende Teilbereiche der Probe anhand des Konfokalbilds ausgewählt wurden.
- **Fig. 7**: zeigt die Abhängigkeit zwischen der Anzahl der aufnehmbaren Bilder und den Abmessungen eines abgetasteten Teilbereichs der Probe.
- **Fig. 8**: zeigt schematisch ein anderes Fluoreszenzmikroskop als in Fig. 5 als weiteres Beispiel für ein Rasterlumineszenzlichtmikroskop zur Durchführung des erfindungsgemäßen Verfahrens.
- **Fig. 9**: ist eine schematische Darstellung eines abzutastenden Teilbereichs einer Probe bei gleichzeitiger Darstellung eines angrenzenden Teilbereichs, in dem mit dem Rasterfluoreszenzmikroskop Ausschaltlicht auf die Probe gerichtet wird.
- **Fig. 10**: illustriert eine Anordnung mehrerer abzutastender Teilbereiche gemäß Fig. 9 in der Probe, um diese mit den abzutastenden Teilbereichen abzutasten.
- **Fig. 11**: illustriert eine andere Anordnung abzutastender Teilbereiche in der Probe.
- **Fig. 12**: ist ein Blockdiagramm zu einer Ausführungsform des erfindungsgemäßen Verfahrens.
- **Fig. 13**: illustriert die Anordnung von abzutastenden Teilbereichen in einer Probe bei dem erfindungsgemäßen Verfahren gemäß Fig. 12.
- **Fig. 14**: illustriert schematisch eine Reaktion eines interessierenden Objekts auf sich verändernde Umgebungsbedingungen; und
- **Fig. 15**: erläutert die Anordnung einer Nullstelle an nur wenigen Orten der Probe beim Antasten eines abzutastenden Teilbereichs.

### FIGURENBESCHREIBUNG

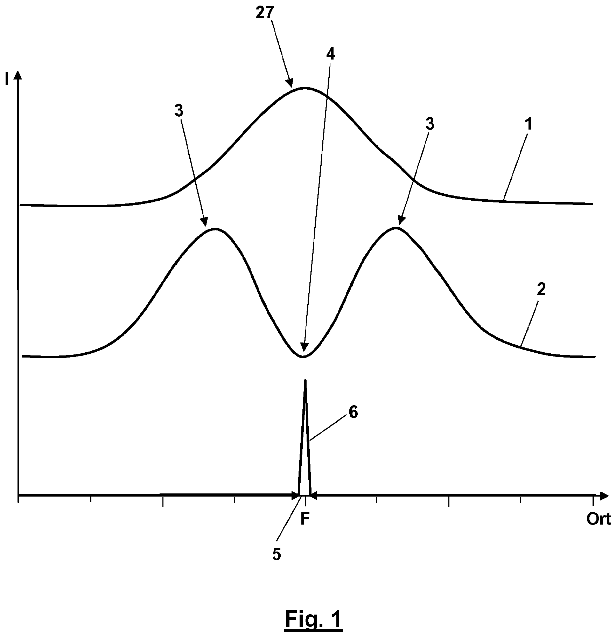

In **Fig. 1** ist oben ein Schnitt durch eine Intensitätsverteilung von Anregungslicht 1 gezeigt. Das Anregungslicht 1 weist an einem geometrischen Fokuspunkt F ein Intensitätsmaximum 27 mit maximaler Intensität I auf. Die Intensität I ist aber über einen sich allseits weit über den Fokuspunkt F hinaus erstreckenden Bereich verteilt, dessen Durchmesser der Beugungsgrenze bei der Wellenlänge Lambda des Anregungslichts 1 und der numerischen Apertur NA des zum Fokussieren des Anregungslichts 1 in den Fokuspunkt F des verwendeten Objektivs gemäß Lambda/NA entspricht. Um die mit dem Anregungslicht 1 erreichte Anregung von Fluoreszenzmarkern in einer Probe auf einen kleineren Bereich als die Ausdehnung der Intensitätsverteilung des Anregungslichts 1 zu beschränken, wird zusätzlich Fluoreszenzverhinderungslicht 2 auf die Probe gerichtet, das eine von Intensitätsmaxima 3 benachbarte Nullstelle 4 aufweist. Das Fluoreszenzverhinderungslicht 2 verhindert die Emission von Fluoreszenzlicht durch von dem Anregungslicht 1 angeregte Fluoreszenzmarker beispielsweise dadurch, dass die Fluoreszenzmarker durch stimulierte Emission wieder abgeregt werden. Überall außerhalb des Bereichs 5 der Nullstelle 4 des Fluoreszenzverhinderungslichts 2 ist die Intensität I des Fluoreszenzverhinderungslichts 2 so groß, dass diese Abregung vollständig erfolgt, das heißt, dass die dort angeordneten Fluoreszenzmarker kein Fluoreszenzlicht emittieren. Umgekehrt ist hier mit "Nullstelle 4" der gesamte Bereich 5 gemeint, innerhalb dessen die Intensität I des Fluoreszenzverhinderungslichts 2 so klein bleibt, dass sie die Emission von Fluoreszenzlicht durch darin angeordnete Fluoreszenzmarker nicht verhindert. Fig. 1 zeigt unten die räumliche Verteilung der effektiven Fluoreszenzanregung 6. Diese ist auf den Bereich 5 der Nullstelle 4 eingegrenzt. Wenn mit der Nullstelle 4 eine Probe abgetastet wird, stammt aus der Probe emittiertes Fluoreszenzlicht immer nur aus dem Bereich 5 und kann entsprechend diesem Ort der Probe zugeordnet werden.

Wenn sich die Nullstelle 4 beim Abtasten einer Probe einer mit Fluoreszenzfarbstoff markierten interessierenden Struktur annähert, gelangen die Fluoreszenzmarker zunächst in den Bereich der Intensitätsmaxima 3 und der damit überlagerten Intensitäten des Anregungslichts 1, bevor sie in den Bereich 5 der Nullstelle 4 gelangen. Insbesondere beim zeilenweisen Abtasten der Probe erfolgt eine wiederholte Beaufschlagung der Fluoreszenzmarker mit hohen Lichtintensitäten, bevor erstmalig Fluoreszenzlicht von ihnen registriert wird. Dies kann dazu führen, dass die Fluoreszenzmarker bereits gebleicht sind, bevor sie erstmalig von der Nullstelle 4 erreicht werden. Auch ein wiederholtes Abtasten derselben Probe, um beispielsweise zeitliche Veränderungen der mit Fluoreszenzmarkern markierten interessierenden Struktur der Probe zu beobachten, ist durch diesen Effekt häufig unmöglich.

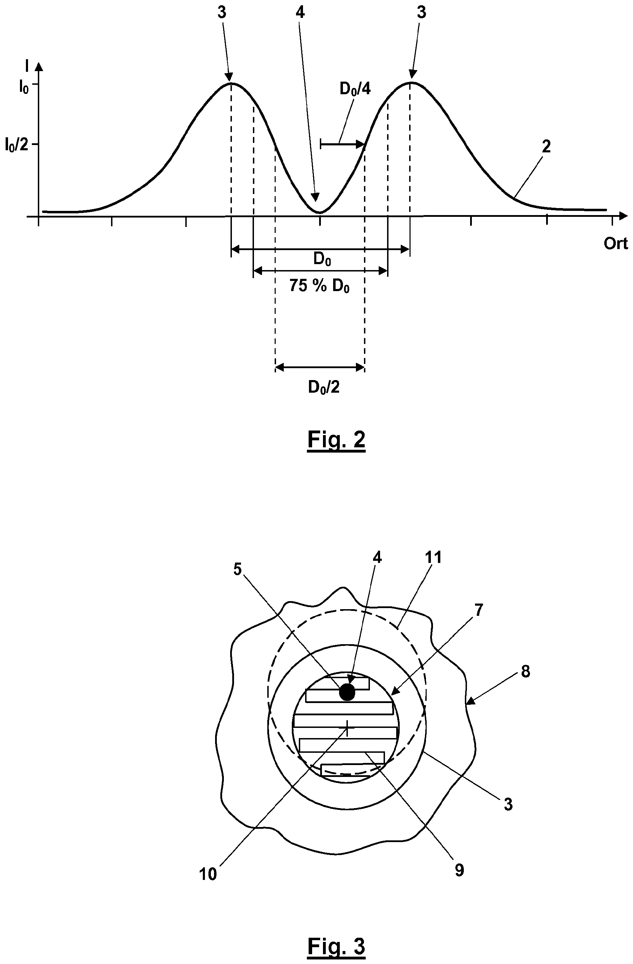

Wenn jedoch der mit der Nullstelle 4 abgetastete Bereich der Probe auf maximal 3/4 oder 75 % eines Abstands D₀ der Intensitätsmaxima 3, wie er in **Fig. 2** eingezeichnet ist, begrenzt wird, sinkt bereits die mittlere Belastung der Fluoreszenzmarker in dem abgetasteten Bereich, die durch die hohen Intensitäten des Fluoreszenzverhinderungslichts 2 im Bereich der Intensitätsmaxima 3 insbesondere in Verbindung mit der Intensität des Anregungslichts 1 gemäß Fig. 1 auftritt. Diese Belastung sinkt weiter, wenn die Abmessungen des abzutastenden Bereichs auf die Hälfte des Abstands D₀ der Intensitätsmaxima 3 und weniger beschränkt werden. Bei einer Begrenzung der Abmessungen auf weniger als D₀/2 gelangt beim Abtasten des abzutastenden Teilbereichs der Probe kein Punkt dieses Teilbereichs mehr in den unmittelbaren Bereich der Intensitätsmaxima 3. Wenn die Abmessungen des abzutastenden Bereichs auf Do/4 eingeschränkt werden, ist die maximale Intensität des Fluoreszenzverhinderungslichts 2, mit der die Probe innerhalb des abzutastenden Bereichs beaufschlagt wird, auf etwa I₀/2 beschränkt, wobei I₀ die maximale Intensität des Fluoreszenzverhinderungslichts 2 in den Intensitätsmaxima 3 ist.

**Fig. 3** illustriert das Abtasten eines abzutastenden Teilbereichs 7 einer ausschnittsweise dargestellten Probe 8 mit dem Bereich 5 der Nullstelle 4 längs einer hier mäanderförmigen Bahn 9. Dabei ist der abzutastende Teilbereich 7 innerhalb der Intensitätsmaxima 3 dargestellt, wobei die Lage dieser Intensitätsmaxima 3 der Ausrichtung der Nullstelle 4 auf einen Mittelpunkt 10 des abzutastenden Teilbereichs 7 entspricht. Dementsprechend verlaufen die Intensitätsmaxima, besser gesagt verläuft das hier ringförmige Intensitätsmaximum 3 um die in Fig. 3 dargestellte Lage der Nullstelle 4 noch durch den abzutastenden Teilbereich 7, was durch eine gestrichelte Linie 11 angedeutet ist. Diese Überschneidung kann aber durch eine weitere Eingrenzung des abzutastenden Teilbereichs 7 auf weniger als D₀/2 verhindert werden. Aber auch durch die hier gegebene Begrenzung der Abmessungen des abzutastenden Teilbereichs 7 auf etwa 2D₀/3 wird eine erhebliche Reduzierung der mittleren Beaufschlagung der Probe 8 in dem Teilbereich 7 mit dem Fluoreszenzverhinderungslicht 2 erreicht.

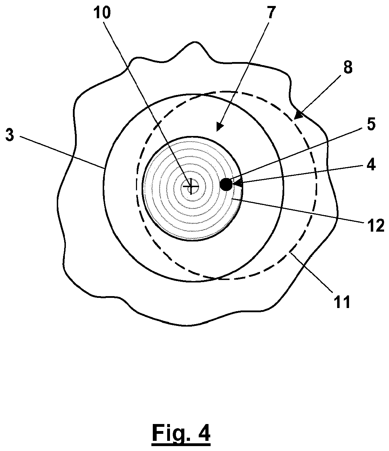

**Fig. 4** illustriert einen auf D₀/2 begrenzten abzutastenden Teilbereich 7 der Probe 8. Hier erreicht der mit gestrichelter Linie 11 angedeutete Verlauf des ringförmigen Intensitätsmaximums 3 bei keiner Position der Nullstelle 4 in dem abzutastenden Teilbereich 7 mehr den Teilbereich 7. Weiterhin zeigt Fig. 4 eine Spiralbahn 12, längs der der abzutastende Teilbereich 7 ausgehend von dem Mittelpunkt 10 abgetastet wird. Unabhängig von der Form der Bahn, auf der die Nullstelle 4 beim Abtasten des abzutastenden Teilbereichs 7 bewegt wird, wird das aus der Probe 8 emittierte und registrierte Fluoreszenzlicht dem jeweiligen Ort der Nullstelle 4 in der Probe zugeordnet.

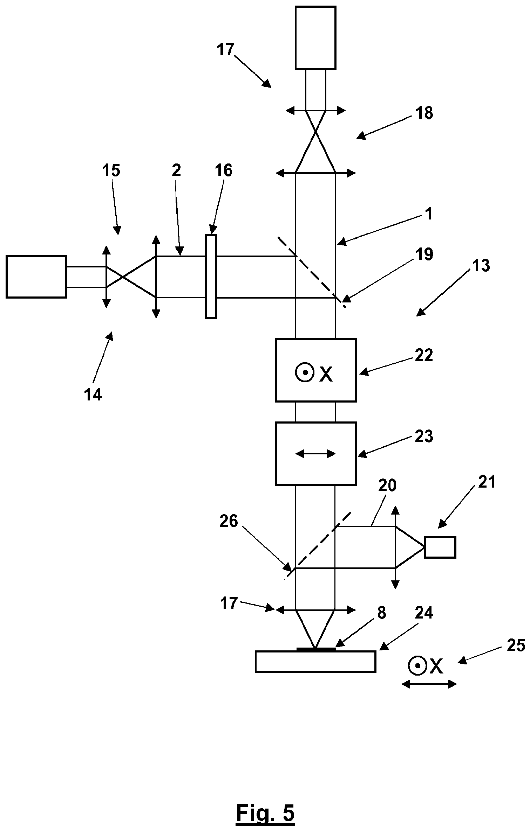

**Fig. 5** illustriert ein Rasterfluoreszenzlichtmikroskop 13, das zur Durchführung eines erfindungsgemäßen Verfahrens besonders geeignet ist. Das Rasterfluoreszenzlichtmikroskop 13 weist eine Lichtquelle 14 für das Fluoreszenzverhinderungslicht 2 auf, dessen Querschnitt mit einer Aufweiteoptik 15 aufgeweitet wird und dessen Wellenfronten über seinen Querschnitt hinweg mithilfe einer Phasenplatte 16 so moduliert werden, dass es nach beim Fokussieren mit einem Objektiv 45 in die Probe 8 die Nullstelle 4 mit benachbarten Intensitätsmaxima 3 gemäß den Fig. 1 und 2 um den jeweiligen Fokuspunkt F ausbildet. Für das Anregungslicht 1 ist eine weitere Lichtquelle 17 mit einer Aufweiteoptik 18 vorgesehen. Mit einem dichroitischen Spiegel 19 werden das Anregungslicht 1 und das Fluoreszenzverhinderungslicht 2 zusammengeführt, so dass das Anregungslicht 1 im Bereich 5 der Nullstelle 4 des Fluoreszenzverhinderungslichts 2 sein Intensitätsmaximum 27 gemäß Fig. 1 aufweist. Das aus der Probe, konkret den Bereich der Nullstelle des Fluoreszenzverhinderungslichts 2 emittierte Fluoreszenzlicht 20 wird mit einem dichroitischen Spiegel 26 ausgekoppelt und mit einem Punktdetektor 21 registriert und dem jeweiligen Ort der Nullstelle in der Probe zugeordnet. Zum Abtasten des jeweiligen Teilbereichs der Probe mit der Nullstelle sind Abtastmittel 22 und 23 für zwei zueinander orthogonale Abtastrichtungen vorgesehen, die aufeinander abgestimmt angesteuert werden. Die Abtastmittel 22 und 23 beeinflussen nur die Richtung des Anregungslichts 1 und des Fluoreszenzverhinderungslichts 2, sie könnten sogar ausschließlich im Strahlengang des Fluoreszenzverhinderungslichts 2 angeordnet sein. Da der abzutastende Teilbereich 7 der Probe 8 Abmessungen unterhalb der Beugungsgrenze aufweist, gelangt auch bei ortsfester Anordnung des Punktdetektors 21 gegenüber der Probe 8 das aus dem Bereich der Nullstelle des Fluoreszenzverhinderungslichts 2 aus der Probe 8 emittierte Fluoreszenzlicht 20 immer in den Punktdetektor 21, d. h. trotz der Verlagerung der Nullstelle mithilfe der Abtastmittel 22 und 23. Für ein über den abzutastenden Teilbereich 7 der Probe 8, der erfindungsgemäß abgetastet wird, hinausgehendes Abtasten der Probe 8, um beispielsweise zunächst die Lage eines geeigneten abzutastenden Teilbereichs zu ermitteln, sind weitere Abtastmittel im Bereich einer Probenhalterung 24 vorgesehen, die hier nur durch entsprechende Verschiebungssymbole 25 angedeutet sind. In der bisherigen Beschreibung wurde nicht explizit zum Ausdruck gebracht, dass die Nullstelle 4 der Intensitätsverteilung des Fluoreszenzverhinderungslichts 2 auch in einer z-Richtung, in der das Fluoreszenzverhinderungslicht 2 auf die Probe gerichtet wird, durch Intensitätsmaxima 3 begrenzt sein kann, um die Ortsauflösung beim Abbilden der interessierenden Struktur in der Probe 8 auch in dieser z-Richtung zu erhöhen. Entsprechend ist dann der abzutastende Teilbereich 7 auch in dieser z-Richtung auf maximal 75 %, vorzugsweise weniger als 50 % des Abstands der Intensitätsmaxima des Lichts in dieser Richtung zu begrenzen oder auch in der z-Richtung an seinem Mittelpunkt 10 beginnend und mit zunehmendem Abstand zu diesem Mittelpunkt 10 abzutasten. Eine erhöhte Ortsauflösung beim Abbilden der Struktur in z-Richtung kann bei dem erfindungsgemäßen Verfahren aber auch durch andere Maßnahmen erreicht werden, beispielsweise durch eine 4Pi-Anordnung oder durch 2-Photonen-Anregung der Fluoreszenzmarker zur Emission des Fluoreszenzlichts oder durch andere auf dem Gebiet der Fluoreszenzmikroskopie bekannte Maßnahmen. Auch grundsätzlich gilt, dass die hier beschriebenen Verfahren durch weitere auf dem Gebiet der Fluoreszenzmikroskopie bekannte Maßnahmen ergänzt werden können. Hierzu zählt beispielsweise das Aufbringen des Fluoreszenzverhinderungslichts 2 und/oder des Anregungslichts 1 in Pulsen, das gleichzeitige kontinuierliche Aufbringen des Anregungslichts 1 bzw. des Fluoreszenzverhinderungslichts 2, das gegatete Registrieren des Fluoreszenzlichts in einem definierten Zeitfenster nach den jeweiligen Pulsen usw.

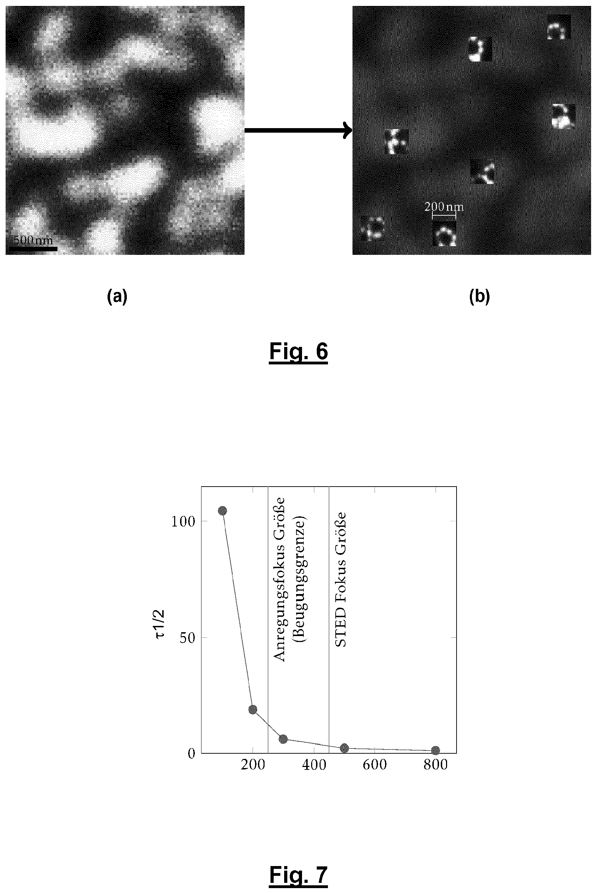

Das Konfokalbild gemäß **Fig. 6 (a)** wurde von einer Probe aufgenommen, bei der eine interessierende Struktur mit dem Lumineszenzmarker Nukleoporin gp210 markiert war. Das Konfokalbild gibt eine Übersicht über die interessierende Struktur. Aus dieser Übersicht wurden einzelne Teilbereiche der Probe ausgewählt, in denen STED-Bilder nach den erfindungsgemäßen Verfahren aufgenommen wurden. Diese Teilbereiche sind kleiner als der Fokus des Anregungslichts. In den Teilbereichen wird die interessierende Struktur mit hoher Ortsauflösung und zugleich hoher Lichtausbeute abgebildet. Zur Aufnahme des in **Fig. 6 (b)** gezeigten, die abgetasteten Teilbereiche wiedergebenden Teilbilds der Probe wurde Anregungslicht einer Wellenlänge von 635 nm und einer Leistung von 5 µW in Pulsen mit einer Wiederholungsrate von 20 MHz auf die Probe gerichtet. STED-Licht mit einer Wellenlänge von 775 nm wurde in synchronisierten Pulsen einer Pulslänge von 1,2 ns mit einer Leistung von 150 mW auf die Probe gerichtet. Das Anregungslicht und das STED-Licht wurden mit einem 1,4 NA Ölinversions-Objektiv in die Probe fokussiert. Das Fluoreszenzlicht wurde mit dem Ölinversions-Objektiv und einer weiteren Linse auf einen Punktdetektor fokussiert.

**Fig. 7** zeigt das Bleichverhalten in Abhängigkeit von den Abmessungen des abgetasteten Teilbereichs einer Probe am Beispiel von gefärbten Kernporenproteinen bei der STED-Rasterfluoreszenzlichtmikroskopie. τ1/2 bezeichnet die Anzahl der Bilder, die aufgenommen werden können, bis das Fluoreszenzsignal durch Bleichen auf die Hälfte des ursprünglichen Werts abgefallen ist. Aufgetragen ist τ1/2 über den Abmessungen des abgetasteten Teilbereichs der Probe in Nanometern. Die STED-Leistung betrug 160 mW, die Anregungsleistung 2 µW. Ansonsten entsprachen die STED-Bedingungen denjenigen gemäß Fig. 6. Bei Abmessungen des abgetasteten Teilbereichs von 100 x 100 nm² ist das Bleichen gegenüber Abmessungen von 800 x 800 nm² um einen Faktor 100 reduziert. Entsprechend können von demselben Teilbereich 100 mal mehr Bilder mehr aufgenommen werden, um beispielsweise einen dynamischen Vorgang zu beobachten.

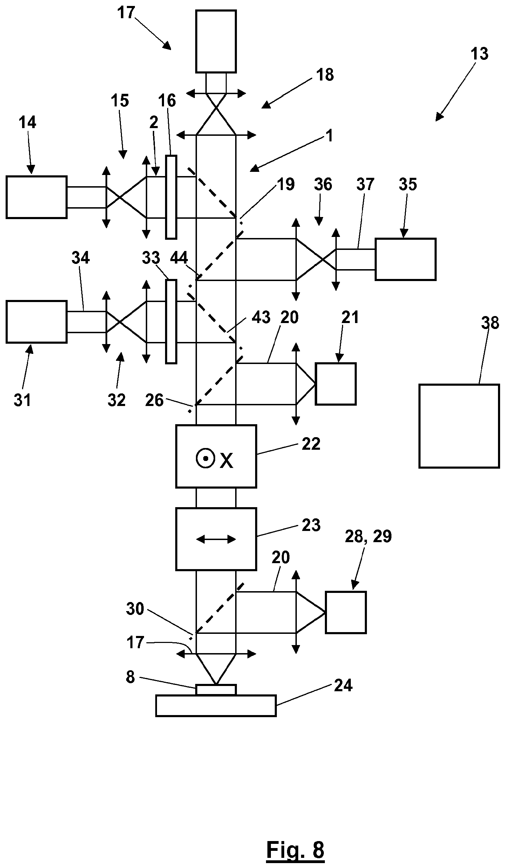

Das in **Fig. 8** illustrierte Rasterfluoreszenzmikroskop 13 weist folgende Unterschiede zu dem in Fig. 5 dargestellten Rasterfluoreszenzmikroskop auf. Der Punktdetektor 21 ist von der Probe 8 aus gesehen hinter den Abtastmitteln 22 und 23 angeordnet, so dass die Abtastmittel das von der Probe 8 kommende Fluoreszenzlicht 20 zu dem Punktdetektor 21 hin entscannen. Dabei sind die Abtastmittel 22 und 23 sowohl zum Abtasten des jeweils mit der Nullstelle des Fluoreszenzverhinderungslichts 2 abzutastenden Teilbereichs als auch zum grundsätzlichen Anordnen oder Verlagern des abzutastenden Teilbereichs in der Probe 8 vorgesehen. Fig. 8 zeigt auch einen von der Probe aus 8 vor den Abtastmitteln 22 und 23 angeordneten Detektor 28 für Fluoreszenzlicht. Hierbei handelt es sich jedoch um keinen Punktdetektor, sondern um eine Kamera 29, d. h. einen flächigen Detektor. Dieser Detektor 28 kann zusätzlich zu dem Punktdetektor 21 oder statt des Punktdetektors 21 vorgesehen sein, wobei ein das Fluoreszenzlicht 20 zu dem Detektor 28 ablenkender dichroitischer Spiegel 30 entweder vorübergehend oder dauerhaft zwischen dem Objektiv 45 und den Abtastmitteln 22 und 23 angeordnet ist.

Weiterhin ist bei dem Rasterfluoreszenzmikroskop 13 gemäß Fig. 8 eine Ausschaltlichtquelle 31 vorgesehen, der eine Aufweiteoptik 32 zugeordnet sind, um vor dem Abtasten des jeweiligen abzutastenden Teilbereichs mit der Nullstelle des Fluoreszenzverhinderungslichts 2 Ausschaltlicht 34 bereitzustellen. Das Ausschaltlicht 34 wird mit Hilfe eines dichroitischen Spiegels 43 eingekoppelt, und mit Strahlformungsmittel 33 wird seine Intensitätsverteilung in der Probe 8 so geformt, dass es in einem an den abzutastenden Teilbereich angrenzenden Teilbereich der Probe 8 in der Probe 8 enthaltene schaltbare Lumineszenzmarker in einen inaktiven Zustand schaltet. In diesem inaktiven Zustand sind die schaltbaren Lumineszenzmarker in der Probe 8 mit dem Anregungslicht 1 nicht zur Emission von Fluoreszenzlicht 20 anregbar. Entsprechend geht für die Lumineszenzmarker in ihrem inaktiven Zustand keine relevante Gefahr des Bleichens von dem Fluoreszenzverhinderungslicht 2 in Form von Stimulationslicht aus. So ist es mit dem Rasterfluoreszenzmikroskop 13 gemäß Fig. 8 möglich, einen an einen schon abgetasteten abzutastenden Teilbereich angrenzenden Teilbereich der Probe 8 mit der Nullstelle des Fluoreszenzverhinderungslichts 2 abzutasten und dabei Fluoreszenzlicht 20 aus der Probe 8 zu registrieren, weil die dort befindlichen Lumineszenzmarker beim Abtasten des zuvor abgetasteten abzutastenden Teilbereichs nicht weggeblichen wurden, da sie sich in ihrem vor dem Bleichen schützenden inaktiven Zustand befanden.

Um die Lumineszenzmarker in dem angrenzenden abzutastenden Teilbereich mit dem Anregungslicht 1 zur Emission von Fluoreszenzlicht 20 anregen zu können, müssen sie wieder in ihrem aktiven Zustand vorliegen. Hierzu kann eine spontane Rückkehr der Lumineszenzmarker aus ihrem inaktiven Zustand in ihren aktiven Zustand abgewartet werden. Das Rasterfluoreszenzmikroskop 13 gemäß Fig. 8 weist aber auch eine zusätzliche Einschaltlichtquelle 35 mit einer Aufweiteoptik 36 auf, um Einschaltlicht 37 über einen dichroitischen Spiegel 44 auf die Probe 8 zu richten, mit der die Lumineszenzmarker in dem nächsten abzutastenden Teilbereich zunächst in ihren aktiven Zustand geschaltet werden. Dabei kann der von dem Einschaltlicht 37 erfasste Teilbereich der Probe 8 größer als der als nächstes abzutastende Teilbereich sein, weil anschließend mit dem Ausschaltlicht 34 die Lumineszenzmarker außerhalb des als nächstes abzutastenden Teilbereichs in ihren inaktiven Zustand überführt werden. Mit dem Rasterfluoreszenzmikroskop 13 kann die Probe 8 demnach zweistufig abgetastet werden, und zwar in großen Schritten mit dem abzutastenden Teilbereich und in kleinen Schritten mit der Nullstelle des Fluoreszenzverhinderungslichts 2 innerhalb jedes abzutastenden Teilbereichs.

Beim Ein- und/oder Ausschalten der Lumineszenzmarker in der Probe 8 mit dem Einschaltlicht 37 bzw. dem Ausschaltlicht 34 werden verschiedene schaltbare Lumineszenzmarker auch zur Emission von Fluoreszenzlicht 20 angeregt. Dieses Fluoreszenzlicht 20 gibt damit bereits Auskunft über die Konzentration der Lumineszenzmarker in dem jeweiligen Teilbereich der Probe 8. Diese Information kann entsprechend ausgewertet und für eine Entscheidung genutzt werden, ob es sich überhaupt lohnt, den nächsten abzutastenden Teilbereich mit der Nullstelle des Fluoreszenzverhinderungslichts 2 abzutasten oder nicht. Wenn es sich nicht lohnt, wird ein solches Abtasten auch nicht durchgeführt, um die Probe 8 nicht unnötig mit dem Fluoreszenzverhinderungslicht 2 zu beaufschlagen. Darüber hinaus kann das beim Ein- bzw. Ausschalten der Lumineszenzmarker registrierte Fluoreszenzlicht 20 auch genutzt werden, um einen oberen und/oder unteren Grenzwert für das an dem jeweiligen Ort der Nullstelle des Fluoreszenzverhinderungslichts 2 in dem abzutastenden Teilbereich registrierte Fluoreszenzlicht festzulegen, bei dessen Erreichen bzw. Nichterreichen die Beaufschlagung der Probe 8 mit dem Lumineszenzverhinderungslicht 2 und dem Anregungslicht 1 im Sinne eines RESCue-Verfahrens abgebrochen wird.

Letztlich zeigt Fig. 8 eine Steuerung 38 für die Lichtquellen 14 und 17, die Einschaltlichtquelle 35, die Ausschaltlichtquelle 31 und die Abtastmittel 22 und 23 des Rasterfluoreszenzmikroskops 13, um diese gemäß dem erfindungsgemäßen Verfahren anzusteuern.

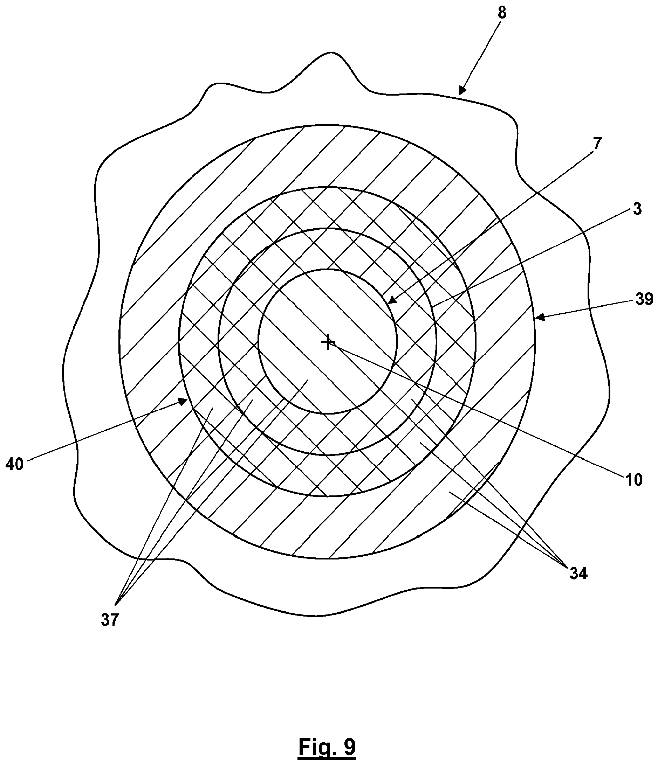

**Fig. 9** zeigt einen abzutastenden Teilbereich 7 und das darum verlaufende Intensitätsmaximum 3 des Fluoreszenzverhinderungslichts, wenn sich die Nullstelle des Fluoreszenzverhinderungslichts im Mittelpunkt 10 des abzutastenden Teilbereichs 7 befindet. In Fig. 9 ist darüber hinaus ein ringförmiger angrenzender Teilbereich 39 eingezeichnet, in dem die Probe 8 vor dem Abtasten des Teilbereichs 7 mit dem Ausschaltlicht 34 beaufschlagt wird, um die hier befindlichen schaltbaren Lumineszenzmarkern in ihren inaktiven Zustand zu überführen. Der Teilbereich 39 spart den Teilbereich 7 aus, d. h. in dem Teilbereich 7 ist die Intensität des Ausschaltlichts 34 null oder zumindest so klein, dass sie zum Ausschalten der Lumineszenzmarker innerhalb der Zeit, für die das Ausschaltlicht 34 auf die Probe 8 gerichtet wird, nicht ausreicht. Um sicherzustellen, dass sich die schaltbaren Lumineszenzmarker zumindest in dem abzutastenden Teilbereich 7 der Probe 8 in ihrem aktiven Zustand befinden, wird vor und/oder zeitlich überlappend mit dem Ausschaltlicht 34 das Einschaltlicht 37 über einen kreisförmigen Teilbereich 40, der den abzutastenden Teilbereich 7 umfasst, auf die Probe 8 gerichtet.

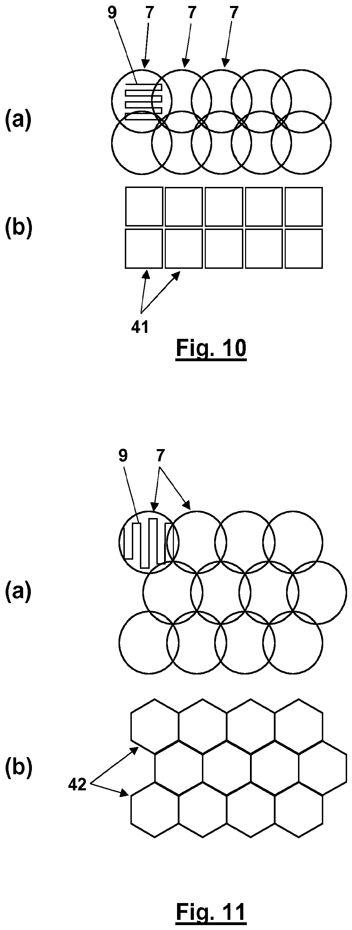

**Fig. 10** illustriert, wie mit dem abzutastenden Teilbereich 7 die Probe 8 abgetastet werden kann. Dabei zeigt **Fig. 10 (a)** mehrere aufeinanderfolgende Lagen des kreisförmigen Teilbereichs 7 gemäß Fig. 9 in der Probe 8 und bei einem dieser Teilbereiche 7 die Bahn 9, längs derer innerhalb des Teilbereichs 7 ein quadratischer Bereich der Probe 8 abgetastet wird. **Fig. 10 (b)** zeigt, wie mit derartigen quadratischen Teilbereichen 41 die Probe 8 vollständig abgedeckt und entsprechend vollständig abgebildet werden kann.

**Fig. 11 (a)** illustriert eine andere Form des Abtastens der Probe 8 mit dem Teilbereich 7. Hier sind die aufeinanderfolgenden Lagen des kreisförmigen Teilbereichs 7 in einer hexagonalen Anordnung in der Probe 8 vorgesehen. Dabei erstreckt sich die Bahn 9, längs derer jeder Teilbereich 7 mit der Nullstelle des Lumineszenzverhinderungslichts abgetastet wird, über ein regelmäßiges Sechseck. **Fig. 11 (b)** zeigt, wie mit diesen regelmäßigen Sechsecken 42 die gesamte Probe 8 erfasst und entsprechend abgebildet wird.

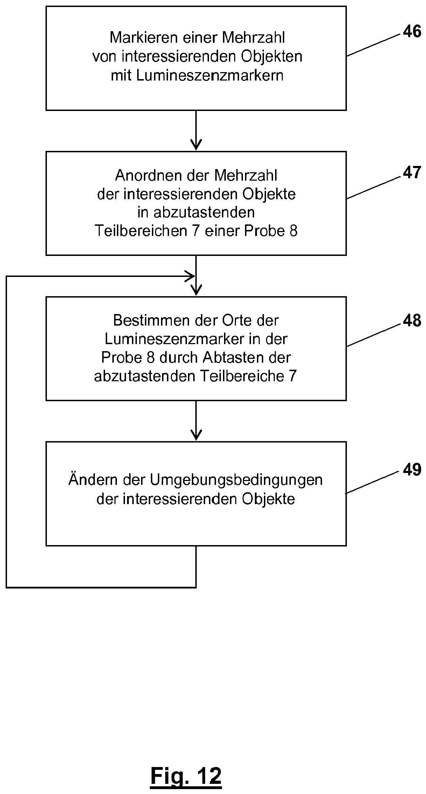

Die in **Fig. 12** in einem Blockdiagramm dargestellte Ausführungsform des erfindungsgemäßen Verfahrens beginnt mit dem Markieren 46 einer Mehrzahl von interessierenden Objekten mit Lumineszenzmarkern. Dabei wird jedes interessierende Objekt zwar mit mehreren Lumineszenzmarkern markiert. Die Anzahl der Lumineszenzmarker je Objekt kann aber klein sein und beispielsweise nur zwei betragen. Konkret können zwei verschiedene Bereiche des interessierenden Objekts, wie beispielsweise eines Proteins mit zwei gleichen oder zwei unterschiedlichen Fluoreszenzmarkern markiert werden, um die Struktur des Objekts dahingehend abzubilden, wie weit diese beiden Bereiche des interessierenden Objekts aktuell voneinander entfernt sind. Beim nachfolgenden Anordnen 47 der Mehrzahl der interessierenden Objekte in den abzutastenden Teilbereichen 7 einer Probe 8 wird in jedem der Teilbereiche 7 eines dieser Objekte angeordnet. Dieses Anordnen 47 von genau einem interessierenden Objekt in jedem Teilbereich kann auf Basis einer Immunreaktion erfolgen, über die jeweils ein interessierendes Objekt an den Mittelpunkt des jeweiligen abzutastenden Teilbereichs 7 angebunden wird. Das nachfolgende Bestimmen 48 der Orte der Lumineszenzmarker in der Probe 8 erfolgt durch Abtasten der abzutastenden Teilbereiche 7 mit der Nullstelle der Intensitätsverteilung des Lichts, das sich auf die Mission von Lumineszenzlicht durch die Lumineszenzmarker auswirkt, also beispielsweise von Lumineszenzanregungslicht. Konkret lassen sich die Orte der Lumineszenzmarker in der Probe 8 aus den Intensitäten des Lumineszenzlichts bestimmen, die zu den einzelnen Orten der Nullstelle in der Probe 8 in Bezug auf jeden der Teilbereiche 7 registriert wurden. Wenn anschließend ein Ändern 49 der Umgebungsbedingungen der interessierenden Objekte erfolgt, das sich auf die Struktur der Objekte und damit auf die relativen Orte der Lumineszenzmarker in der Probe 8 auswirkt, kann diese Auswirkung durch Wiederholen des Bestimmens 48 erfasst werden. Dabei kann das Bestimmen 48 mehrfach wiederholt werden, wobei diese Wiederholungen schon während des Änderns 49 beginnen und sich auch noch danach fortsetzen können, um die Dynamik der Reaktion der interessierenden Objekte auf die veränderten Umgebungsbedingungen zu erfassen.

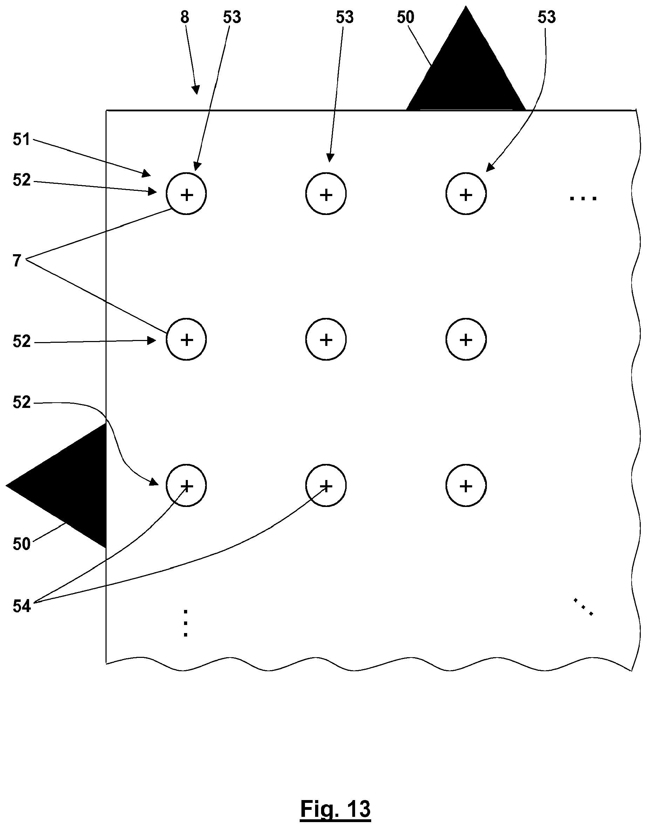

**Fig. 13** zeigt eine Probe 8, in der gegenüber Fixpunkten 50 eine Vielzahl von abzutastenden Teilbereichen 7 in einem Muster 51 definiert angeordnet ist. Bei dem Muster 51 handelt es sich hier um ein quadratisches Muster, in dem die Teilbereiche 7 in Zeilen 52 und Spalten 53 regelmäßig angeordnet sind. Dabei ist jeder der abzutastenden Teilbereiche 7 unter Verwendung der Fixpunkte 50 auffindbar und mit der Nullstelle der Intensitätsverteilung des sich auf die Emission von Lumineszenzlicht durch die Lumineszenzmarker auswirkenden Lichts anfahrbar. In Mittelpunkten 54 der Teilbereiche 7 können die interessierenden Objekte durch die bereits angesprochene Immunreaktion angekoppelt werden, so dass überlappend mit jedem der Teilbereiche 7 jeweils ein interessierendes Objekt angeordnet wird.

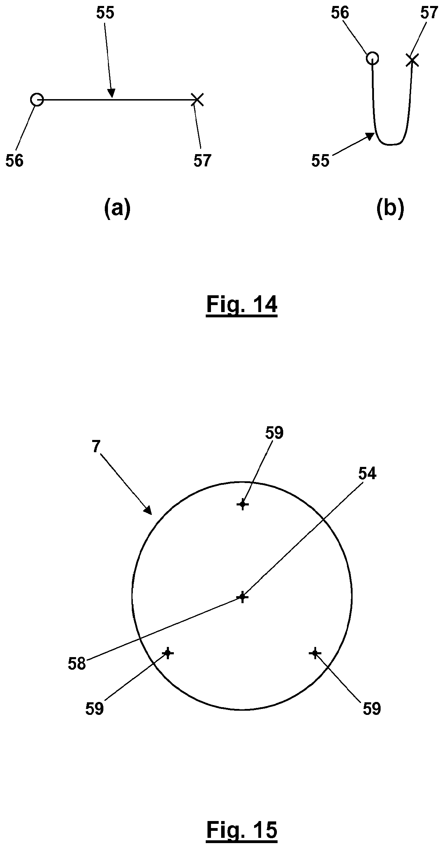

**Fig. 14** zeigt stark schematisch ein interessierendes Objekt 55, das in zwei Bereichen mit zwei hier unterschiedlich dargestellten Lumineszenzmarkern 56 und 57 markiert ist. Gezeigt ist, dass die Lumineszenzmarker 56 und 57 an den beiden Enden des linienförmigen Objekts 55 angeordnet sind. Fig. 14a zeigt dabei eine gestreckte Struktur des Objekts 55, während Fig. 14b eine gekrümmte oder gefaltete Struktur des Objekts 55 zeigt. Die Änderung zwischen der gestreckten Struktur gemäß Fig. 14a und der gefalteten Struktur gemäß Fig. 14b kann die Reaktion des Objekts 55 auf geänderte Umgebungsbedingungen sein, beispielsweise einen geänderten pH-Wert oder die Anwesenheit einer bestimmten chemischen Substanz. Dabei kann die Änderung der Struktur mit dem erfindungsgemäßen Verfahren leicht registriert werden, indem der Abstand der beiden Lumineszenzmarker 56 und 57 erfasst wird. Dazu können die Positionen der beiden Lumineszenzmarker 56 und 57 in der Probe gleichzeitig bestimmt werden, wenn das von ihnen emittierte Lumineszenzlicht aufgrund unterschiedlicher Wellenlängen oder zeitlich getrennt werden kann, weil die beiden Lumineszenzmarker 56 und 57 jeweils nur vorübergehend Lumineszenzlicht emittieren. Ein vorübergehendes Emittieren von Lumineszenzlicht durch nur jeweils einen der beiden Lumineszenzmarker 56 und 57, auch wenn diese identisch sind, kann durch verschiedene Umstände erreicht werden, beispielsweise indem die Lumineszenzmarker 56 und 57 in Folge ihrer Anregung mit Lumineszenzanregungslicht vorübergehend in einen Dunkelzustand gelangen oder als schaltbare Lumineszenzmarker ausgebildet sind, die mit zusätzlichem Ausschaltlicht vorübergehend in einen Dunkelzustand geschaltet werden können.

**Fig. 15** skizziert für einen abzutastenden Teilbereich 7 vier Orte 58 und 59, an denen die Nullstelle der Intensitätsverteilung des sich auf die Emission von Lumineszenzlicht auswirkenden Lichts angeordnet werden kann, um den Ort eines einzelnen emittierenden Lumineszenzmarkers 56, 57 in den Teilbereich 7 zu bestimmen. Dabei liegt der Ort 58 an dem Mittelpunkt 54 des Teilbereichs 7, und die Orte 59 liegen auf einem Kreisbogen im Randbereich des Teilbereichs 7. Indem der Teilbereich 7 mit nur vier Orten der Nullstelle abgetastet wird, um den Ort des jeweiligen Lumineszenzmarkers 56 bzw. 57 in einer Ebene der Probe zu bestimmen, kann dieses Bestimmen sehr schnell erfolgen. Wenn zudem das Licht, das sich auf die Emission von Lumineszenzlicht auswirkt und das mit der Intensitätsverteilung mit der Nullstelle auf die Probe gerichtet wird, Anregungslicht ist, das also auf den jeweiligen Lumineszenzmarker 56, 57 nur mit geringer Intensität trifft, werden nur sehr wenige Photonen von dem jeweiligen Lumineszenzmarker 56, 57 benötigt, um seine Position in dem Teilbereich 7 zu bestimmen. Dies lässt auch bei empfindlichen Lumineszenzmarkern eine wiederholte Positionsbestimmung zu, um Reaktionen des interessierenden Objekts 55 auf sich ändernde Umgebungsbedingungen zu erfassen.

### BEZUGSZEICHENLISTE

- 1: Anregungslicht
- 2: Fluoreszenzverhinderungslicht
- 3: Intensitätsmaximum
- 4: Nullstelle
- 5: Bereich
- 6: Anregung
- 7: abzutastender Teilbereich
- 8: Probe
- 9: Bahn
- 10: Mittelpunkt
- 11: gestrichelte Linie
- 12: Spiralbahn
- 13: Rasterfluoreszenzmikroskop
- 14: Lichtquelle
- 15: Aufweiteoptik
- 16: Phasenplatte
- 17: weitere Lichtquelle
- 18: Aufweiteoptik
- 19: dichroitischer Spiegel
- 20: Fluoreszenzlicht
- 21: Punktdetektor
- 22: Abtastmittel
- 23: Abtastmittel
- 24: Probenhalterung
- 25: Verschiebungssymbol
- 26: dichroitischer Spiegel
- 27: Intensitätsmaximum
- 28: Detektor
- 29: Kamera
- 30: dichroitischer Spiegel
- 31: Ausschaltlichtquelle
- 32: Aufweiteoptik
- 33: Strahlformungsmittel
- 34: Ausschaltlicht
- 35: Einschaltlichtquelle
- 36: Aufweiteoptik
- 37: Einschaltlicht
- 38: Steuerung
- 39: angrenzender Teilbereich
- 40: Teilbereich
- 41: Quadrat
- 42: Sechseck
- 43: dichroitischer Spiegel
- 44: dichroitischer Spiegel
- 45: Objektiv
- 46: Markieren (Schritt)
- 47: Anordnen (Schritt)
- 48: Bestimmen (Schritt)
- 49: Ändern (Schritt)
- 50: Fixpunkt
- 51: Muster
- 52: Reihe
- 53: Spalte
- 54: Mittelpunkt
- 55: Objekt
- 56: Lumineszenzmarker
- 57: Lumineszenzmarker
- 58: Ort
- 59: Ort
- F: Fokuspunkt
- I: Intensität
- D₀: Abstand

## Patentansprüche

1. Verfahren zum hochaufgelösten Abbilden einer mit Lumineszenzmarkern (56. 57) markierten Struktur in einer Probe (8),
- wobei Licht, das sich auf die Emission von Lumineszenzlicht durch die Lumineszenzmarker (56, 57) auswirkt, mit einer Intensitätsverteilung auf die Probe (8) gerichtet wird, die eine von Intensitätsmaxima (3) benachbarte Nullstelle (4) aufweist,
- wobei abzutastende Teilbereiche (7) der Probe (8) mit der Nullstelle (4) abgetastet werden und
- wobei aus dem Bereich der Nullstelle (4) emittiertes Lumineszenzlicht registriert und dem Ort der Nullstelle (4) in der Probe (8) zugeordnet wird,
**dadurch gekennzeichnet,**
- **dass** mehrere Exemplare eines interessierenden Objekts (55) jeweils überschneidend mit einem der abzutastenden Teilbereiche (7) der Probe (8) angeordnet werden,
- **dass** die mehreren Exemplare des interessierenden Objekts (55) veränderten Umgebungsbedingungen unterworfen werden, um hierauf erfolgende Reaktionen des interessierenden Objekts (55) zu erfassen, wobei die einzelnen Teilbereiche der Probe (8) während und/oder vor und nach den veränderten Umgebungsbedingungen mit der jeweiligen Nullstelle (4) abgetastet werden,
- **dass** Abmessungen der abzutastenden Teilbereiche (7) der Probe (8) in mindestens einer Richtung, in der die Intensitätsmaxima (3) der Nullstelle (4) in der Probe benachbart sind, so begrenzt werden, dass sie nicht größer sind als 75 % eines Abstands (D₀) der Intensitätsmaxima (3) in dieser Richtung,
- **dass** das Licht, das sich auf die Emission von Lumineszenzlicht durch die Lumineszenzmarker (56. 57) auswirkt,
- Lumineszenzermöglichungslicht ist oder
- Lumineszenzverhinderungslicht ist, das die Emission von Lumineszenzlicht durch die Lumineszenzmarker (56, 57) außerhalb der Nullstelle (4) verhindert, und
- **dass** vor dem Abtasten des abzutastenden Teilbereichs (7) der Probe (8) mit der Nullstelle (4) zusätzlich Ausschaltlicht (34) mit einer solchen Intensitätsverteilung auf die Probe (8) gerichtet wird, dass es die als schaltbare Lumineszenzmarker ausgebildeten Lumineszenzmarker in einem an den abzutastenden Teilbereich (7) angrenzenden Teilbereich (39) der Probe (8) in einen inaktiven Zustand ausschaltet, wobei der angrenzende Teilbereich (39) in der mindestens einen Richtung, in der die Intensitätsmaxima (3) der Nullstelle (4) in der Probe benachbart sind, an den abzutastenden Teilbereich (7) angrenzt.

2. Verfahren nach Anspruch 1, **dadurch gekennzeichnet, dass** verschiedene Teilmengen der mehreren Exemplare des interessierenden Objekts (55) in der Probe (8) unterschiedlichen veränderten Umgebungsbedingungen unterworfen werden.

3. Verfahren nach Anspruch 1 oder 2, **dadurch gekennzeichnet, dass** die Umgebungsbedingungen durch Hinzufügen einer chemischen Substanz verändert werden.

4. Verfahren nach einem der vorhergehenden Ansprüche, **dadurch gekennzeichnet, dass** die mehreren Exemplare des interessierenden Objekts (55) in einem gegenüber Fixpunkten (50) der Probe (8) definierten Muster (51) angeordnet werden und dass die abzutastenden Teilbereiche der Probe (8) mit der Nullstelle (4) relativ zu den Fixpunkten (50) der Probe (8) angefahren werden.

5. Verfahren nach einem der vorhergehenden Ansprüche, **dadurch gekennzeichnet, dass** die abzutastenden Teilbereiche (7) der Probe (8) wiederholt mit der Nullstelle (4) abgetastet werden, wobei optional zumindest bei einer Wiederholung des Abtastens der abzutastenden Teilbereiche der Probe (8) die Nullstelle (4) an nicht mehr als 3n oder 2n Orten je abzutastendem Teilbereich (7) angeordnet wird, wobei n die Anzahl der Raumrichtungen ist, in denen die abzutastenden Teilbereiche der Probe (8) abgetastet werden.

6. Verfahren nach einem der vorhergehenden Ansprüche, **dadurch gekennzeichnet, dass** das in mehreren Exemplaren in der Probe (8) angeordnete Objekt (55) aus der Gruppe ausgewählt ist, die Moleküle, Proteine, Komplexe, Synapsen, Membranen, Zellbestandteile und Viren umfasst.

7. Verfahren nach einem der vorhergehenden Ansprüche, **dadurch gekennzeichnet, dass** die Abmessungen des abzutastenden Teilbereichs (7) der Probe (8) in der mindestens einen Richtung, in der die Intensitätsmaxima (3) der Nullstelle (4) in der Probe benachbart sind,
- nicht größer sind als 50 %, 45 %, 25 % oder 10 % des Abstands (D₀) der Intensitätsmaxima (3) in dieser Richtung und/oder
- nicht größer sind als eine Strecke, über die die Intensität (I) des Lichts ausgehend von der Nullstelle (4) in dieser Richtung auf 50 %, 25 %, 10 % oder 5 % der Intensität (I) des Lichts in den benachbarten Intensitätsmaxima (3) ansteigt.

8. Verfahren nach einem der vorhergehenden Ansprüche, **dadurch gekennzeichnet, dass** vor dem Abtasten des abzutastenden Teilbereichs (7) der Probe (8) die Struktur in der Probe (8) auf andere Weise abgebildet wird, um die Lage des abzutastenden Teilbereichs (7) in der Probe (8) festzulegen, wobei optional dass vor dem Abtasten des abzutastenden Teilbereichs (7) der Probe (8) ein größerer Teilbereich der Probe (8) mit der Nullstelle (4) mit einer um mindestens 50 % geringeren Intensität des Lichts und/oder mit einer um mindestens 50 % höheren Abtastgeschwindigkeit abgetastet wird.

9. Verfahren nach Anspruch 8, **dadurch gekennzeichnet, dass** zum Abtasten des größeren Bereichs der Probe (8) andere Abtastmittel verwendet werden als zum Abtasten des abzutastenden Teilbereichs (7) der Probe (8), wobei optional
- zum Abtasten des größeren Bereichs der Probe (8) in mindestens einer Richtung eine Probenhalterung (24) relativ zu einem Objektiv (17) bewegt wird, mit dem das Licht auf die Probe (8) gerichtet wird, und/oder
- zum Abtasten des abzutastenden Teilbereichs (7) der Probe (8) in mindestens einer Richtung ein elektro-optischer Scanner, ein akusto-optischer Deflektor oder ein Galvospiegel verwendet wird.

10. Verfahren nach einem der vorhergehenden Ansprüche, **dadurch gekennzeichnet, dass** dann, wenn das Licht, das sich auf die Emission von Lumineszenzlicht durch die Lumineszenzmarker (56. 57) auswirkt, Lumineszenzermöglichungslicht ist, das Lumineszenzermöglichungslicht die Emission von Lumineszenzlicht durch die Lumineszenzmarker (56. 57) ermöglicht, indem es die Lumineszenzmarker (56. 57) zur Lumineszenz anregt und/oder aus einem Dunkelzustand in einen anregbaren Zustand überführt.

11. Verfahren nach einem der Ansprüche 1 bis 9, **dadurch gekennzeichnet, dass** dann, wenn das Licht, das sich auf die Emission von Lumineszenzlicht durch die Lumineszenzmarker (56. 57) auswirkt, Lumineszenzverhinderungslicht ist, das die Emission von Lumineszenzlicht durch die Lumineszenzmarker (56. 57) außerhalb der Nullstelle (4) verhindert, das Lumineszenzverhinderungslicht Stimulationslicht ist, das die Emission von Lumineszenzlicht durch die Lumineszenzmarker (56. 57) außerhalb der Nullstelle (4) durch stimulierte Emission verhindert, wobei das Stimulationslicht zusammen mit Anregungslicht (1) auf die Probe (8) gerichtet wird, das die Lumineszenzmarker (56. 57) zur Emission von Lumineszenzlicht anregt und das eine Intensitätsverteilung mit einem Maximum (27) im Bereich der Nullstelle (4) des Lumineszenzverhinderungslichts aufweist.

12. Verfahren nach einem der vorhergehenden Ansprüche **dadurch gekennzeichnet, dass** die Probe mit dem abzutastenden Teilbereich (7) abgetastet wird, wobei der abzutastende Teilbereich (7) an allen oder ausgewählten Positionen des abzutastenden Teilbereichs (7) mit der Nullstelle (4) abgetastet wird.

13. Verfahren nach einem der vorhergehenden Ansprüche, **dadurch gekennzeichnet, dass** die Intensitätsverteilung des Ausschaltlichts (34) in dem abzutastenden Teilbereich (7) ein durch destruktive Interferenz ausgebildetes lokales Intensitätsminimum aufweist.

14. Verfahren nach einem der vorhergehenden Ansprüche, **dadurch gekennzeichnet, dass** vor und/oder zeitlich überlappend mit dem Richten des Ausschaltlichts (34) auf die Probe (8) Einschaltlicht (37) auf den abzutastenden Teilbereich (7) der Probe (8) gerichtet wird, das die schaltbaren Lumineszenzmarker (56. 57) in ihren aktiven Zustand einschaltet.

15. Verfahren nach einem der vorhergehenden Ansprüche, **dadurch gekennzeichnet, dass** beim Einschalten und/oder Ausschalten von den schaltbaren Lumineszenzmarker (56. 57) emittiertes Lumineszenzlicht (20) registriert und ausgewertet wird, wobei das Ergebnis des Auswertens optional ist,
- ob der von dem angrenzenden Teilbereich (39) begrenzte abzutastende Teilbereich (7) mit der Nullstelle (4) abgetastet wird und/oder
- ob das Anregungslicht (1) in den von dem angrenzenden Teilbereich (39) begrenzten abzutastende Teilbereich (7) auf die Probe (8) gerichtet wird und/oder
- unter welchen Bedingungen das Richten des Stimulationslicht auf die Probe (8) in jeder Position der Nullstelle (4) in dem von dem angrenzenden Teilbereich (39) begrenzten abzutastenden Teilbereich (7) und das Registrieren des aus dem Bereich der Nullstelle (4) emittiertes Lumineszenzlichts (20) abgebrochen wird.

16. Verfahren nach einem der vorhergehenden Ansprüche, **dadurch gekennzeichnet, dass** aus dem Bereich der Nullstelle (4) emittiertes Lumineszenzlicht mit einem Punktsensor (21) registriert wird, dessen Lage gegenüber der Probe (8) beim Abtasten des abzutastenden Teilbereichs (7) der Probe (8) nicht verändert wird.

17. Verfahren nach einem der vorhergehenden Ansprüche, **dadurch gekennzeichnet, dass** die mehreren abzutastenden Teilbereiche (7) der Probe (8) gleichzeitig abgetastet werden.

18. Verfahren zum hochaufgelösten Abbilden einer mit Lumineszenzmarkern (58. 57) markierten Struktur in einer Probe (8),
- wobei Licht, das sich auf die Emission von Lumineszenzlicht durch die Lumineszenzmarker (56, 57)auswirkt, mit einer Intensitätsverteilung auf die Probe (8) gerichtet wird, die eine von Intensitätsmaxima (3) benachbarte, Nullstelle (4) aufweist,
- wobei abzutastende Teilbereiche (7) der Probe (8) mit der Nullstelle (4) abgetastet werden und
- wobei aus dem Bereich der Nullstelle (4) emittiertes Lumineszenzlicht registriert und dem Ort der Nullstelle (4) in der Probe (8) zugeordnet wird,
- wobei mehrere Exemplare eines interessierenden Objekts (55) jeweils überschneidend mit einem der abzutastenden Teilbereiche (7) der Probe (8) angeordnet werden,
- wobei die mehreren Exemplare des interessierenden Objekts (55) veränderten Umgebungsbedingungen unterworfen werden, um hierauf erfolgende Reaktionen des interessierenden Objekts (55) zu erfassen, wobei die einzelnen Teilbereiche der Probe (8) während und/oder vor und nach den veränderten Umgebungsbedingungen mit der jeweiligen Nullstelle (4) abgetastet werden,
- wobei Abmessungen der abzutastenden Teilbereiche (7) der Probe (8) in mindestens einer Richtung, in der die Intensitätsmaxima (3) der Nullstelle (4) in der Probe benachbart sind, so begrenzt werden, dass sie nicht größer sind als 75 % eines Abstands (D₀) der Intensitätsmaxima (3) in dieser Richtung,
- wobei die mehreren Exemplare des interessierenden Objekts (55) in einem gegenüber Fixpunkten (50) der Probe (8) definierten Muster (51) angeordnet werden und
- wobei die abzutastenden Teilbereiche der Probe (8) mit der Nullstelle (4) relativ zu den Fixpunkten (50) der Probe (8) angefahren werden.

## Claims

1. Method of high-resolution imaging of a structure marked with luminescence markers (56, 57) in a sample (8),
- wherein light, which has an effect on the emission of luminescence light by the luminescence markers (56, 57), is directed onto the sample (8) with an intensity distribution having a zero point (4) neighboured by intensity maxima (3),
- wherein partial areas (7) to be scanned of the sample (8) are scanned with the zero point (4), and
- wherein luminescence light emitted out of the area of the zero point (4) is registered and assigned to the location of the zero point (4) in the sample (8),
**characterised in**
- **that** several copies of an object (55) of interest are each arranged overlapping with one of the partial areas (7) to be scanned of the sample (8),
- **that** the several copies of the object (55) of interest are subjected to varied surrounding conditions to monitor reactions of the object (55) of interest resulting therefrom, wherein the individual partial areas of the sample (8) are scanned during, and/or prior to and after the varied surrounding conditions with the respective zero point (4),
- **that** dimensions of the partial areas (7) to be scanned of the sample (8) are delimited in at least one direction, in which the intensity maxima (3) are neighbouring the zero point (4) in the sample, such that they are not larger than 75 % of a distance (D₀) of the intensity maxima (3) in this direction,
- **that** the light, which has an effect on the emission of luminescence light by the luminescence markers (56, 57), is
- luminescence enabling light,
- luminescence inhibiting light, which inhibits the emission of luminescence light by the luminescence markers (56, 57) outside the zero point (4), and
- **that**, prior to scanning the partial area (7) to be scanned of the sample (8) with the zero point (4), switch-off light (34) is additionally directed onto the sample (8) with such an intensity distribution that, in a partial area (39) of the sample (8) neighbouring the partial area (7) to be scanned, it switches off the luminescence markers, which are made as switchable luminescence markers, into an inactive state, wherein the neighbouring partial area (39) is neighbouring the partial area (7) to be scanned in the at least one direction in which the intensity maxima (3) are neighbouring the zero point (4) in the sample.

2. Method of claim 1, **characterised in that** different subsets of the several copies of the object (55) of interest in the sample (8) are subjected to different varied surrounding conditions.

3. Method of claim 1 or 2, **characterised in that** the surrounding conditions are varied by adding a chemical substance.

4. Method of any of the preceding claims, **characterised in that** the several copies of the object (55) of interest are arranged in a pattern (51) defined with regard to fixed points (50) of the sample (8), and that the partial areas to be scanned of the sample (8) are approached with the zero point (4) relative to the fixed points (50) of the sample (8).

5. Method of any of the preceding claims, **characterised in that** the partial areas (7) to be scanned of the sample (8) are repeatedly scanned with the zero point (4), wherein, optionally, at least in one repetition of the scanning of the partial areas to be scanned of the sample (8), the zero point (4) is arranged at not more than 3n or 2n locations per partial area (7) to be scanned, wherein n is the number of the spatial directions in which the partial areas to be scanned of the sample (8) are scanned.

6. Method of any of the preceding claims, **characterised in that** the object (55) which is arranged in the sample (8) in several copies is selected from the group which includes molecules, proteins, complexes, synapses, membranes, cell components and viruses.

7. Method of any of the preceding claims, **characterised in that** the dimensions of the partial area (7) to be scanned of the sample (8), in the at least one direction, in which the intensity maxima (3) are neighbouring the zero point (4) in the sample, are
- not larger than 50 %, 45 %, 25 % or 10 % of the distance (D₀) of the intensity maxima (3) in this direction, and/or
- not larger than a way over which the intensity (I) of the light starting from the zero point (4) in this direction increases up to 50 %, 25 %, 10 % or 5 % of the intensity (I) of the light in the neighbouring intensity maxima (3).

8. Method of any of the preceding claims, **characterised in that**, prior to scanning the partial area (7) to be scanned of the sample (8), the structure in the sample (8) is imaged in another way to determine the position of the partial area (7) to be scanned in the sample (8), wherein, optionally, prior to scanning the partial area (7) to be scanned of the sample (8), a larger partial area of the sample (8) is scanned with the zero point (4) at an intensity of the light reduced by at least 50 % and/or at a scanning speed increased by at least 50 %.

9. Method of claim 8, **characterised in that** other scanning means are used for scanning the larger area of the sample (8) than for scanning the partial area (7) to be scanned of the sample (8), wherein, optionally,
- for scanning the larger area of the sample (8) in at least one direction, a sample holder (24) is moved relative to an objective lens (17), by which the light is directed onto the sample (8), and/or
- an electro-optical scanner, an acusto-optical deflector or a galvo mirror is used for scanning the partial area (7) to be scanned of the sample (8) in at least one direction.

10. Method of any of the preceding claims, **characterised in that**, in case that the light, which has an effect on the emission of luminescence light by the luminescence markers (56, 57), is luminescence enabling light, the luminescence enabling light, enables the emission of luminescence light by the luminescence markers (56, 57) **in that** it excites the luminescence markers (56, 57) for luminescence and/or transfers the luminescence markers (56, 57) out of a dark state into an excitable state.

11. Method of any of the claims 1 to 9, **characterised in that**, in caser that the light, which has an effect on the emission of luminescence light by the luminescence markers (56, 57), is luminescence inhibiting light, which inhibits the emission of luminescence light by the luminescence markers (56, 57) outside the zero point (4), the luminescence inhibiting light is stimulation light, which inhibits the emission of luminescence light by the luminescence markers (56, 57) outside the zero point (4) by stimulated emission, wherein the stimulation light is directed onto the sample (8) together with excitation light (1), which excites the luminescence markers (56, 57) for emission of luminescence light and which has an intensity distribution comprising a maximum (27) in the area of the zero point (4) of the luminescence inhibiting light.

12. Method of any of the preceding claims, **characterised in that** the sample is scanned with the partial area (7) to be scanned, wherein the partial area (7) to be scanned is scanned with the zero point (4) at all or at selected positions of the partial area (7) to be scanned.

13. Method of any of the preceding claims, **characterised in that** the intensity distribution of the switch-off light (34) has a local intensity minimum in the partial area (7) to be scanned, which is formed by destructive interference.

14. Method of any of the preceding claims, **characterised in that** prior to and/or temporarily overlapping with the directing of the switch-off lights (34) onto sample (8), switch-on light (37) is directed onto the partial area (7) to be scanned of the sample (8), which switches the switchable luminescence markers (56, 57) into their active state.

15. Method of any of the preceding claims, **characterised in that** luminescence light (20) emitted in switching on and/or switching off of the switchable luminescence markers (56, 57) is registered and evaluated, wherein the result of the evaluation, optionally, is
- whether the partial area (7) to be scanned and neighboured by the neighbouring partial area (39), is scanned with the zero point (4), and/or
- whether the excitation light (1) is directed onto the sample (8) in the partial area (7) to be scanned and neighboured by the neighbouring partial area (39), and/or
- under which conditions the directing of the stimulation light onto the sample (8) in each position of the zero point (4) in the partial area (7) to be scanned and neighboured by the neighbouring partial area (39), and the registering of the luminescence light (20) emitted out of the area of the zero point (4) are terminated.

16. Method of any of the preceding claims, **characterised in that** luminescence light emitted out of the area of the zero point (4) is registered with a point sensor (21), whose location with regard to the sample (8) is not altered in scanning the partial area (7) to be scanned of the sample (8).

17. Method of any of the preceding claims, **characterised in that** the several partial areas (7) to be scanned of the sample (8) are scanned simultaneously.

18. Method of high-resolution imaging of a structure marked with luminescence markers (56, 57) in a sample (8),
- wherein light, which has an effect on the emission of luminescence light by the luminescence markers (56, 57), is directed onto the sample (8) with an intensity distribution having a zero point (4) neighboured by intensity maxima (3),
- wherein partial areas (7) to be scanned of the sample (8) are scanned with the zero point (4), and
- wherein luminescence light emitted out of the area of the zero point (4) is registered and assigned to the location of the zero point (4) in the sample (8),
- wherein several copies of an object (55) of interest are each arranged overlapping with one of the partial areas (7) to be scanned of the sample (8),
- wherein the several copies of the object (55) of interest are subjected to varied surrounding conditions to monitor reactions of the object (55) of interest resulting therefrom, wherein the individual partial areas of the sample (8) are scanned during, and/or prior to and after the varied surrounding conditions with the respective zero point (4),
- wherein dimensions of the partial areas (7) to be scanned of the sample (8) are delimited in at least one direction, in which the intensity maxima (3) are neighbouring the zero point (4) in the sample, such that they are not larger than 75 % of a distance (D₀) of the intensity maxima (3) in this direction,
- wherein the several copies of the object (55) of interest are arranged in a pattern (51) defined with regard to fixed points (50) of the sample (8), and
- wherein the partial areas to be scanned of the sample (8) are approached with the zero point (4) relative to the fixed points (50) of the sample (8).

## Revendications

1. Procédé de représentation à haute résolution d'une structure marquée avec des marqueurs luminescents (56, 57) dans un échantillon (8),
- la lumière qui agit sur l'émission de la lumière luminescente par les marqueurs luminescents (56, 57), étant dirigée sur l'échantillon (8) avec une répartition d'intensité qui présente un point zéro (4) voisin de maxima d'intensité (3),
- des zones partielles (7) à balayer de l'échantillon (8) sont balayées avec le point zéro (4) et
- la lumière luminescente émise à partir de la zone du point zéro (4) étant enregistrée et attribuée à l'emplacement du point zéro (4) dans l'échantillon (8),
**caractérisé en ce que**
- plusieurs exemplaires d'un objet intéressant (55) sont disposés de manière superposée avec une des zones partielles à balayer (7) de l'échantillon (8),
- les plusieurs exemplaires de l'objet intéressant (55) sont soumis à des conditions ambiantes modifiées afin de détecter les réactions de l'objet intéressant (55) à celles-ci, les différentes zones partielles de l'échantillon (8) étant balayées pendant et/ou avant et après les conditions ambiantes modifiées avec le point zéro (4) correspondant,
- les dimensions des zones partielles à balayer (7) de l'échantillon (8) sont limitées, dans au moins une direction, dans laquelle les maxima d'intensité (3) sont voisins du point zéro (4) dans l'échantillon, de façon à ce qu'elles ne soient pas supérieures à 75 % d'une distance (D₀) des maxima d'intensité (3) dans cette direction,
- la lumière qui agit sur l'émission de la lumière luminescente par l'intermédiaire des marqueurs luminescents (56, 57)
- est une lumière permettant la luminescence ou
- est une lumière empêchant la luminescence qui empêche l'émission d'une lumière de luminescence par les marqueurs luminescents (56, 57) en dehors du point zéro (4) et
- avant le balayage de la zone partielle à balayer (7) de l'échantillon (8) avec le point zéro (4), une lumière de désactivation (34) est, en outre, dirigée sur l'échantillon (8), avec une répartition d'intensité telle qu'elle met les marqueurs luminescents, conçus comme des marqueurs luminescents commutables, dans une zone partielle (39), adjacente à la zone partielle à balayer (7) de l'échantillon (8), dans un état inactif, dans lequel la zone partielle adjacente (39) est adjacente, dans l'au moins une direction dans laquelle les maxima d'intensité (3) sont voisins du point zéro (4) dans l'échantillon, à la zone partielle à balayer (7).

2. Procédé selon la revendication 1, **caractérisé en ce que** différentes quantités partielles des plusieurs exemplaires de l'objet intéressant (55) dans l'échantillon (8) sont soumis à différentes conditions ambiantes modifiées.

3. Procédé selon la revendication 1 ou 2, **caractérisé en ce que** les conditions ambiantes sont modifiées par l'ajout d'une substance chimique.

4. Procédé selon l'une des revendications précédentes, **caractérisé en ce que** les plusieurs exemplaires de l'objet intéressant (55) sont disposés dans un modèle (51) défini par rapport à des points fixes (50) de l'échantillon (8) et **en ce que** les zones partielles à balayer de l'échantillon (8) sont approchées avec le point zéro (4) par rapport aux points fixes (50) de l'échantillon (8).

5. Procédé selon l'une des revendications précédentes, **caractérisé en ce que** les zones partielles à balayer (7) de l'échantillon (8) sont balayées de manière répétée avec le point zéro (4), moyennant quoi, en option, lors d'une répétition du balayage des zones partielles à balayer de l'échantillon (8), le point zéro (4) est disposé à ne pas plus de 3n ou de 2n emplacements par zone partielle à balayer (7), n étant le nombre de directions spatiales dans lesquelles les zones partielles à balayer de l'échantillon (8) sont balayées.

6. Procédé selon l'une des revendications précédentes, **caractérisé en ce que** l'objet (55) disposé en plusieurs exemplaires dans l'échantillon (8) est sélectionné dans le groupe comprenant des molécules, des protéines, des complexes, des synapses, des membranes, des composants de cellules et des virus.

7. Procédé selon l'une des revendications précédentes, **caractérisé en ce que** les dimensions de la zone partielle à balayer (7) de l'échantillon (8), dans l'au moins une direction dans laquelle les maxima d'intensité (3) sont voisins du point zéro (4) dans l'échantillon,
- ne sont pas supérieures à 50 %, 45 %, 25 % ou 10 % de la distance (D₀) des maxima d'intensité (3) dans cette direction et/ou
- ne sont pas supérieures à une distance sur laquelle l'intensité (I) de la lumière, à partir du point zéro (4), augmente, dans cette direction, à 50 %, 25 % 10 % ou 5 % de l'intensité (I) de la lumière dans les maxima d'intensité (3) voisins.

8. Procédé selon l'une des revendications précédentes, **caractérisé en ce que**, avant le balayage de la zone partielle à balayer (7) de l'échantillon (8), la structure de l'échantillon (8) est représentée d'une autre manière afin de déterminer la position de la zone partielle à balayer (7) dans l'échantillon (8), moyennant quoi, en option, avant le balayage de la zone partielle à balayer (7) de l'échantillon (8), une zone partielle plus importante de l'échantillon (8) est balayée avec le point zéro (4) avec une intensité au moins 50 % plus faible de la lumière et/ou avec une vitesse de balayage au moins 50 % plus élevée.

9. Procédé selon la revendication 8, **caractérisé en ce que**, pour le balayage de la zone plus importante de l'échantillon (8), sont utilisés des moyens de balayage différents de ceux qui sont utilisés pour le balayage de la zone partielle à balayer (7) de l'échantillon (8), moyennant quoi, en option,
- pour le balayage de la zone plus importante de l'échantillon (8), dans au moins une direction, un support d'échantillon (24) est déplacé par rapport à un objet (17) avec lequel la lumière est dirigée vers l'échantillon (8) et/ou
- pour le balayage de la zone partielle à balayer (7) de l'échantillon (8), dans au moins une direction, un scanner électro-optique, déflecteur acousto-optique ou un galvo-miroir est utilisé.

10. Procédé selon l'une des revendications précédentes, **caractérisé en ce que**, lorsque la lumière qui agit sur l'émission de lumière luminescente par les marqueurs luminescents (56, 57), est une lumière permettant la luminescence, la lumière permettant la luminescence permet l'émission de lumière luminescente par les marqueurs luminescents (56, 57), grâce au fait qu'elle excite les marqueurs luminescents (56, 57) afin d'obtenir une luminescence et/ou les fait passer d'un état sombre à un état excitable.

11. Procédé selon l'une des revendications 1 à 9, **caractérisé en ce que**, lorsque la lumière qui agit sur l'émission de lumière luminescente par les marqueurs luminescents (56, 57) est une lumière empêchant la luminescence, qui empêche l'émission de lumière luminescente par les marqueurs luminescents (56, 57) hors du point zéro (4), la lumière empêchant la luminescence est une lumière de stimulation qui empêche l'émission de lumière luminescente par les marqueurs luminescents (56, 57) hors du point zéro (4) par une émission stimulée, la lumière de stimulation étant dirigée, conjointement avec la lumière d'excitation (1), vers l'échantillon (8), qui excite les marqueurs luminescents (56, 57) pour l'émission d'une lumière luminescente et qui présente une répartition d'intensité avec un maximum (27) au niveau du point zéro (4) de la lumière empêchant la luminescence.

12. Procédé selon l'une des revendications précédentes, **caractérisé en ce que** l'échantillon est balayé avec la zone partielle à balayer (7), la zone partielle à balayer (7) étant balayée à toutes les positions ou à des positions sélectionnées de la zone partielle à balayer (7) avec le point zéro (4).

13. Procédé selon l'une des revendications précédentes, **caractérisé en ce que** la répartition d'intensité de la lumière de désactivation (34) présente, dans la zone partielle à balayer (7), un minimum d'intensité local réalisé grâce à une interférence destructive.

14. Procédé selon l'une des revendications précédentes, **caractérisé en ce que**, avant et/ou en concomitance avec l'orientation de la lumière de désactivation (34) vers l'échantillon (8), une lumière d'activation (37) est dirigée vers la zone partielle à balayer (7) de l'échantillon (8), qui fait passer les marqueurs luminescents commutables (56, 57) dans leur état actif.

15. Procédé selon l'une des revendications précédentes, **caractérisé en ce que**, lors de l'activation et/ou de la désactivation, la lumière luminescente (20) émise par les marqueurs luminescents commutables (56, 57) est enregistrée et analysée, le résultat de l'analyse indiquant, en option,
- si la zone partielle à balayer (7) limitée par la zone partielle adjacente (39) est balayée avec le point zéro (4) et/ou
- si la lumière d'excitation (1) est dirigée, dans la zone partielle à balayer (7) limitée par la zone partielle adjacente (39), vers l'échantillon (8) et/ou
- dans quelles conditions l'orientation de la lumière de stimulation vers l'échantillon (8) dans chaque position du point zéro (4) dans la zone partielle à balayer (7) limitée par la zone partielle adjacente (39) et l'enregistrement de la lumière luminescente (20) émise à partir de la zone du point zéro (4) sont interrompus.

16. Procédé selon l'une des revendications précédentes, **caractérisé en ce que** la lumière luminescente émise à partir de la zone du point zéro (4) est enregistrée avec un capteur ponctuel (21), dont la position par rapport à l'échantillon (8) n'est pas modifiée lors du balayage de la zone partielle à balayer (7) de l'échantillon (8).

17. Procédé selon l'une des revendications précédentes, **caractérisé en ce que** les plusieurs zones partielles à balayer (7) de l'échantillon (8) sont balayées simultanément.

18. Procédé de représentation à haute résolution d'une structure marquée avec des marqueurs luminescents (56, 57) dans un échantillon (8),
- la lumière qui agit sur l'émission de la lumière luminescente par les marqueurs luminescents (56, 57), étant dirigée sur l'échantillon (8) avec une répartition d'intensité qui présente un point zéro (4) voisin de maxima d'intensité (3),
- des zones partielles (7) à balayer de l'échantillon (8) étant balayées avec le point zéro (4) et
- la lumière luminescente émise à partir de la zone du point zéro (4) étant enregistrée et attribuée à l'emplacement du point zéro (4) dans l'échantillon (8),
- plusieurs exemplaires d'un objet intéressant (55) étant disposés chacun de manière superposée avec une des zones partielles à balayer (7) de l'échantillon (8),
- les plusieurs exemplaires de l'objet intéressant (55) étant soumis à des conditions ambiantes modifiées afin de détecter les réactions de l'objet intéressant (55) à celles-ci, les différentes zones partielles de l'échantillon (8) étant balayées pendant et/ou avant et après les conditions ambiantes modifiées avec le point zéro (4) correspondant,
- les dimensions des zones partielles à balayer (7) de l'échantillon (8) étant limitées, dans au moins une direction, dans laquelle les maxima d'intensité (3) sont voisins du point zéro (4) dans l'échantillon, de façon à ce qu'elles ne soient pas supérieures à 75 % d'une distance (D₀) des maxima d'intensité (3) dans cette direction,
- les plusieurs exemplaires de l'objet intéressant (55) étant disposés dans un motif (51) défini par rapport à des points fixes (50) de l'échantillon (8) et
- les zones partielles à balayer de l'échantillon (8) avec le point zéro (4) étant approchées par rapport aux points fixes (50) de l'échantillon (8).
